# EUROPEAN PATENT SPECIFICATION

(11) **EP 1 131 704 B1**
(45) Date of publication and mention of the grant of the patent: **26.03.2014**
(21) Application number: 99972324.0
(22) Date of filing: 12.11.1999
(51) Int. Cl.: G06F 9/38

(54) **PROCESSING SYSTEM SCHEDULING**
VERARBEITUNGSSYSTEM-AUFSTELLUNG
ORDONNANCEMENT POUR SYSTEME DE TRAITEMENT

(30) Priority: 16.11.1998 SE 9803901
(43) Date of publication of application: 12.09.2001
(73) Proprietor: Telefonaktiebolaget LM Ericsson (publ), 164 83 Stockholm (SE)
(72) Inventor: HOLMBERG, Per, Anders, S-118 42 Stockholm (SE); KLING, Lars-Örjan, S-151 52 Södertälje (SE); JOHNSON, Sten, Edward, S-123 42 Farsta (SE); SOHONI, M., Indian Inst. of Tech., Powai, Hillside, Mombai 400 076 (IN); TIKEKAR, Nikhil, Bangalore 560 025 (IN)
(74) Representative: Stenborg, Anders Vilhelm
(86) International application number: PCT/SE1999/002065
(87) International publication number: WO 2000/029943

(56) References cited:
- EP-A2- 0 230 721
- US-A- 5 379 428
- US-A- 5 848 257
- PATENT ABSTRACTS OF JAPAN & JP 10 143 382 A (HITACHI LTD) 29 May 1998

## Description

### TECHNICAL FIELD OF THE INVENTION

The present invention relates to processing systems with a plurality of processors having a shared memory and in particular to job scheduling in such systems.

### BACKGROUND OF THE INVENTION

With the ever-increasing demand for improved processing capacity in computer systems comes the need for faster and more efficient processors. The conventional approach for increasing the processing capacity of processors relies on the use of higher and higher clock frequencies, to increase the speed of the processor. However, since data handling and memory accesses many times are the limiting factors, also other actions are necessary.

A common way of increasing the processing capacity of a processing system, especially without modifying the application software, is to use so-called superscalar processors, which explore fine-grained parallelism found between neighboring instructions. In a superscalar processor, the functional units within the processor are arranged to simultaneously execute several instructions in parallel. This is sometimes referred to as instruction-level parallelism (ILP).

Another way of increasing the processing capacity is to build the processing system as a multiprocessor system, i.e. a processing system with multiple processors operating in parallel. Some processing systems achieve high performance processing through an architecture known as Symmetrical Multi Processors (SMPs). In contrast to the fine-grained parallelism achieved by a superscalar processor, the SMP architecture exploits coarse-grained parallelism that is either explicitly specified in programs designed according to concurrent programming principles, or extracted from programs designed for sequential execution on a single-processor system during compilation. In an SMP architecture, each one of several tasks is carried out on a respective one of several processors. These tasks are mutually concurrent processes or threads.

In the Patent abstracts of Japan, abstract of JP 10-143382 A (HITACHI LTD), 29 May 1998 (29.05.98) managing of resources for a shared memory multiprocessor system is disclosed. Assignment is made according to free memory at the different processors,

An example of a parallel processing computer system is disclosed in the U.S. patent 5,379,428. A scheduler is used for scheduling processes on processes on processor clusters. An interrupter is provided to stop the execution of a process if a process with higher priority occurs in the scheduler. The executed processes are independent of each other and therefore non-speculative.

The U.S. patent 5,848,257 discloses a method and an apparatus for multitasking in a computer system. A scheduler is used for scheduling processes on independently executing. The state of each process is independent of the state of all other processes.

In the published European patent application EP 0 230 721, a multiprocessor system is described. Different processors operate against a common global memory comprising different data flow programs. When all necessary input data is present, the data flow program is scheduled on a pre-assigned processor for execution.

In the article Multiscalar Processors by Sohi, Breach and Vijaykumar, 22nd Annual International Symposium on Computer Architecture, Santa Margherita, Ligure, Italy (1995), a so-called multiscalar processor is described. In the multiscalar model of execution, a control flow graph (CFG) representing a static program with regard to control dependencies is partitioned into tasks, and the multiscalar processor walks through the CFG speculatively, taking task-sized steps, without pausing to inspect any of the instructions within a task. A task is assigned to one of a collection of processing units for execution, by passing the initial program counter of the task to the processing unit. Multiple tasks can then execute in parallel on the processing units, resulting in an aggregate execution rate of multiple instructions per cycle. The function of the multiscalar hardware is to walk through the CFG, assign tasks to the processing units and execute these tasks with the appearance of sequential execution. Additional hardware is provided to hold speculative memory operations, detect violations of memory dependencies, and initiate corrective action as needed. Since the task at the head is the only task that is guaranteed to be non-speculative, memory operations carried out by all units, except the head, are speculative.

In processor systems, where external events are the origins of most original jobs, the appearances of jobs are strongly stochastic and create an asynchronous stream of jobs within the processor system. In such systems an efficient handling of jobs is particularly difficult to obtain. There is still a general demand for more efficient processing systems.

### RELATED ART

U.S. Patent 5,239,539 issued to Uchida et al. discloses a controller for controlling the switching network of an ATM exchange by uniformly distributing loads among a plurality of call processors. A main processor assigns originated call processings to the call processors in the sequence of call originations or by the channel identifiers attached to the respective cells of the calls. A switching state controller collects usage information about a plurality of buffers in the switching network, and the call processors perform call processings based on the content of the switching state controller.

The Japanese Patent abstract JP 6276198 discloses a packet switch in which plural processor units are provided, and the switching processing of packets is performed with the units being mutually independent.

The Japanese Patent abstract JP 4100449 A discloses an ATM communication system which distributes signaling cells between an ATM exchange and a signaling processor array (SPA) by STM-multiplexing ATM channels. Scattering of processing loads is realized by switching the signaling cells by means of an STM based on SPA numbers added to each virtual channel by a routing tag adder.

The Japanese Patent abstract JP 5274279 discloses a device for parallel processing which forms a hierarchical set of processors, where processor element groups are in charge of parallel and pipeline processing.

### SUMMARY

It is thus a general object of the present invention to provide a processing system, which offer efficient parallel execution of jobs. Another object of the invention is to provide shared-memory processors arranged for efficient parallel processing of jobs. Yet another object of the present invention is to improve the scheduling efficiency in a processing system for job-parallel execution. A further object of the present invention is to reuse application software existing for single-processor systems in a multi-processor system.

These and other objects are met by the invention as defined by the accompanying patent claims.

According to a first aspect of the invention, a processing system comprises a number of memory-sharing processors arranged for parallel processing of jobs, and data consistency means for assuring data consistency. The processing system comprises a scheduler, for scheduling jobs for execution on the processors according to a first algorithm, which uses job locality/ concurrency to increase the execution efficiency. The processing system according to the present invention further uses means for retiring the jobs in an order given by a second algorithm. The second algorithm is different from the first algorithm. The second algorithm operates according to a first-in-first-out principle, where a global order, e.g. of creation, is conserved. The first algorithm may be adjusted to the particular system used, and may base the scheduling to a particular processor on e.g. the source, target, communication channel or creating processor for the job in question. The processing system uses a common job queue, and the scheduling is performed adaptively. Furthermore, the scheduler and the means for retiring are preferably distributed units.

According to a second aspect of the invention, a telecommunication system comprises a processing system as described above.

According to a third aspect of the invention, a job processing method for such a system comprises the steps of storing jobs in a common job queue, executing the jobs on parallel memory-sharing processors and assuring data consistency when global data in the shared memory are manipulated by the processors. The method further comprises the steps of scheduling jobs in the common queue for execution on the processors according to a first algorithm, and retiring jobs according to a second algorithm, different from the first algorithm. The second algorithm operates according to a first-in-first-out principle, where a global order, e.g. of creation, is conserved. The first algorithm may be adjusted to the particular system used, and may base the scheduling to a particular processor on e.g. the source, target, communication channel or creating processor for the job in question. The scheduling of jobs for execution is adaptive to the particular application characteristics, phase of operation and/or hardware architecture of the system.

In a shared memory system, the entire application program and data are accessible to all the shared-memory processors in the system. Accordingly, data consistency (sequencing as well as atomic access related) must be assured when the processors manipulate global data.

According to the invention, data consistency can be assured by speculative parallel execution of jobs, where dependency collisions between jobs are detected and speculatively executed jobs, for which dependency collisions are detected, are rolled back and restarted. Dependency collisions are either detected based on variable markings, or alternatively detected based on address comparison where read and write addresses are compared.

By marking larger areas instead of individual data, a more coarse-grained dependency collision check is realized.

The solution according to the invention substantially increases the throughput capacity of the processing system.

By using shared-memory multiprocessors and providing appropriate means for assuring data consistency, application software already existing for single-processor systems may be reused. In the case of implementing the multiple processors using standard off-the-shelf microprocessors all of the application software can be reused by automatically transforming the application software and possibly modifying the virtual machine/operating system of the system to support multiple processors. On the other hand, if multiple processors are implemented as specialized hardware of proprietary design, the application software can be directly migrated to the multiprocessor environment. Either way, this saves valuable time and reduces the programming costs compared to designing the application software from scratch.

The invention offers the advantage of increasing the throughput capacity by efficiently scheduling jobs for parallel execution using inherent job locality/concurrency. The system is furthermore easily software adaptable to hardware architecture, application characteristics and operation mode, i.e. it is universally applicable to almost any processing system, especially event-based. Moreover, the invention also allows reuse of already existing application software in particular in the case of block/object-oriented designs. Other advantages offered by the present invention will be apparent upon reading the detailed description of embodiments of the invention.

### BRIEF DESCRIPTION OF THE DRAWINGS

The invention, together with further objects and advantages thereof, may best be understood by making reference to the following description taken together with the accompanying drawings, in which:
FIG. 1 is a schematic diagram of a processing system according to an embodiment of the present invention;
FIG. 2 is a schematic diagram of a processing system according to another embodiment of the present invention;
FIG. 3a is a schematic block diagram illustrating an embodiment of a common job queue according to the present invention;
FIG. 3b is a schematic block diagram illustrating another embodiment of a common job queue according to the present invention;
FIG. 3c is a schematic block diagram illustrating an alternative embodiment of a common job queue according to the present invention;
FIG. 3d is a schematic block diagram illustrating an embodiment of a sectioned common job queue according to the present invention;
FIG. 4a is a schematic diagram illustrating paths of jobs arriving from different communication channels in a processing system according to the present invention;
FIG. 4b is a schematic diagram illustrating paths of internally created jobs in a processing system according to the present invention;
FIG. 4c is a schematic diagram illustrating paths of jobs destined to different targets in a processing system according to the present invention;
FIG. 4d is a schematic diagram illustrating paths of jobs requiring data from different sources in a processing system according to the present invention;
FIG. 5 is a schematic block diagram of a processing system with a block/object-oriented design of the shared-memory software;
FIG. 6 is a drawing of an illustrative communication system according to the present invention;
FIG. 7 is a schematic illustration of a marker process of a data consistency method, which may be used together with the present invention; and
FIG. 8 is a flow diagram illustrating a job handling process according to the present invention.

### DETAILED DESCRIPTION

Throughout the drawings, the same reference characters will be used for corresponding or similar elements.

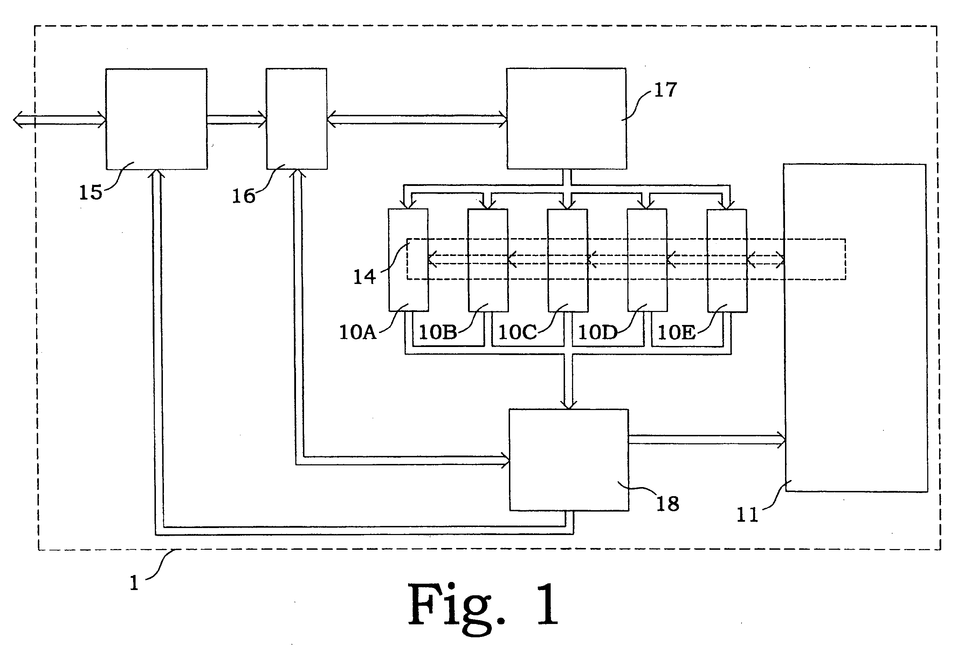

Fig. 1 is a schematic diagram of a processing system according to the invention. An efficient way of increasing throughput capacity according to the invention includes the use of multiple shared-memory processors 10a-e. Preferably, the multiple shared-memory processors 10a-e are realized in the form of a multiprocessor system based on standard microprocessors. The term "multiple shared-memory processors" should in the present disclosure also comprise logically similar implementations, such as multiple shared-memory process units implemented on the same chip. All processors 10a-e share a common memory, the so-called shared memory 11. In general, external events in the form of job signals first arrive to an input/output (I/O) unit 15, from which they are forwarded to a job queue 16. The items in the job queue are normally not actually jobs themselves, but rather job signals or any other representation of a job. However, throughout the description, "job" will be used also for interchangeably indicating the occurrence of "representations of jobs". The jobs related to the items in the job queue are scheduled for execution to one of the processors 10a-e. The jobs are also scheduled for retirement in a certain order, a commit order. Retirement involves confirming changes done during execution of job to memory, inserting internally generated jobs in the common queue and sending outbound signals to external units etc. A scheduler 17 performs the scheduling either upon the entrance of the jobs into the job queue 16 or at a later occasion. A more detailed description of the actual scheduling is given below.

According to the scheduling, jobs are distributed to the different processors for execution. Since the processors are shared-memory processors, instructions and data are stored in the shared memory 11. There is a certain possibility that jobs, executed in parallel on different processors, have certain mutual dependencies. A concurrency situation regarding global data may occur. In order to assure that the data is consistent, means for assuring data consistency 14 are provided. This means for assuring data consistency 14 normally involves functions of the different processors 10a-e as well as the shared memory 11 and is therefore typically built in a distributed manner, as illustrated by the broken line in fig. 1. The means for assuring data consistency 14 is further described below.

When the execution of a job is finished, the job has to be retired or committed. Such a retirement is performed by a committer 18 according to the scheduled commit order. Thus, the committer 18 cooperates with the shared memory 11 and the job queue 16 for performing a retirement in an appropriate manner. The committer 18 and the commit order will be further discussed below. The execution of one job may result in changes in the data stored in the shared memory, but may also give rise to new jobs or messages. Such internally created jobs or messages may be intended for external units or for the processors of the present system. Jobs and messages intended for external units are brought to the input/output (I/O) unit 15, for further transmission to the right receiver. Internal jobs may also be directed along this path or directly into the job queue or even directly to a certain processor.

The computation for an event-based system is generally modeled as a state machine, where an input job from the external world changes the state of the system and may result in an output job. If an independent/disjoint state machine could process each job stage, there would not be any sharing of data between the various state machines. But given that there are global resources, which are represented by global states, the operation on a given global state normally has to be "atomic" with only one processor, which executes part of the system state machine, accessing a given global state at a time. There may even be sequence dependencies between jobs in the common queue. In a shared-memory system, the entire program space and data space in the shared memory are accessible to all the processors. Consequently, it is necessary to assure data consistency, as the processors need to manipulate global data common to all of or at least more than one of the processors. This is accomplished by the data consistency means.

In processor systems where the software is based on a sequenced programming, it is important that the jobs are retired in a correct order. This allows detections and corrections of sequence dependencies between jobs. The most logical retirement order within each priority level is to follow a first-in-first-out (FIFO) principle, i.e. the oldest job is retired first. Jobs originating from different sources may also become dependent on each other, and a global order, e.g. of creation, may be used as the commit order. Asynchronous jobs may be retired immediately upon execution, and may therefore be given a default global order. Hence, the commit scheduling is performed according to the FIFO order of the job queue.

The most primitive manner of scheduling jobs for execution is also according to a FIFO order. That is, there is a queue of jobs to be executed in the job queue 16, and the jobs are distributed for execution in the same order as they entered the job queue 16. The oldest available job is subsequently scheduled to the different processors as long as there are available processors in the system. When a processor gets available, the oldest of the jobs is directed to this processor. The global order is then conserved by the retirement procedure once the jobs are executed.

This design schedules jobs to processors based on the job order specified more or less entirely by the program order. There are however, several other considerations, which may be of importance when scheduling jobs in multiprocessor systems. For example, jobs executed by different processors may manipulate the same data, which leads to data inconsistency/collisions, which in turn leads to rollbacks or stalls, reducing the over-all processing speed. Caches are used to take advantage of data locality in time and space. A corresponding job locality is also present, which can be used to schedule the jobs in a more efficient manner. Also, in asymmetric configurations, all processors do not have the capabilities needed to perform all tasks and a job might have to wait for a processor with the right capabilities to be available.

Thus, in accordance with the present invention, execution scheduling is performed according to a first algorithm and commit scheduling is performed according to a second algorithm. The second algorithm is different from the first algorithm, and of a FIFO type, conserving the global order, e.g. of creation. The first algorithm, i.e. the rule after which the execution scheduling is performed, is preferably adapted to the particular processing system. The algorithm may thereby be adjusted to fit the specific application characteristics, the phase of operation and the hardware architecture of the processing system. Such adaptation is performed periodically or intermittently during operation.

The first algorithm uses rules and heuristics that tries to optimize the overall system performance. One concern is to keep jobs that manipulates the same data on the same processor as much as possible, in order to reduce a concurrency situation and/or to optimize the cache hit ratio in local processor caches. Another concern is balancing the load between processors for keeping all busy at all times. A third consideration is to avoid starvation and to meet real time requirements. All jobs must be guaranteed to be scheduled to a processor within a certain time period.

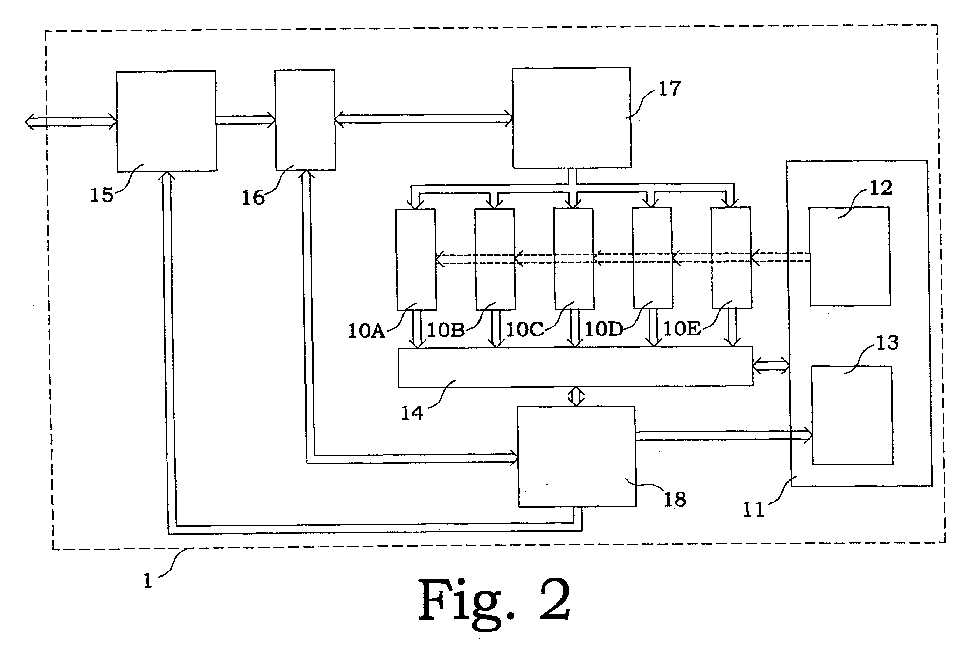

Fig. 2 illustrates another embodiment of a processing system 1 according to the invention. Here, the means for assuring data consistency 14 is illustrated as a common means for all processors 10a-e, but separated from the actual job execution portions of the processors 10a-e. The illustration is intended for a situation, where jobs are speculatively executed on the processors 10a-e, and the means for assuring data consistency 14 comprises e.g. a write-back memory area and dependency checking means. The processors 10a-e may read the program instructions from e.g. a program store 12 in the memory 11, while the means for assuring data consistency 14 operates mainly against a data store 13 in the memory 11.

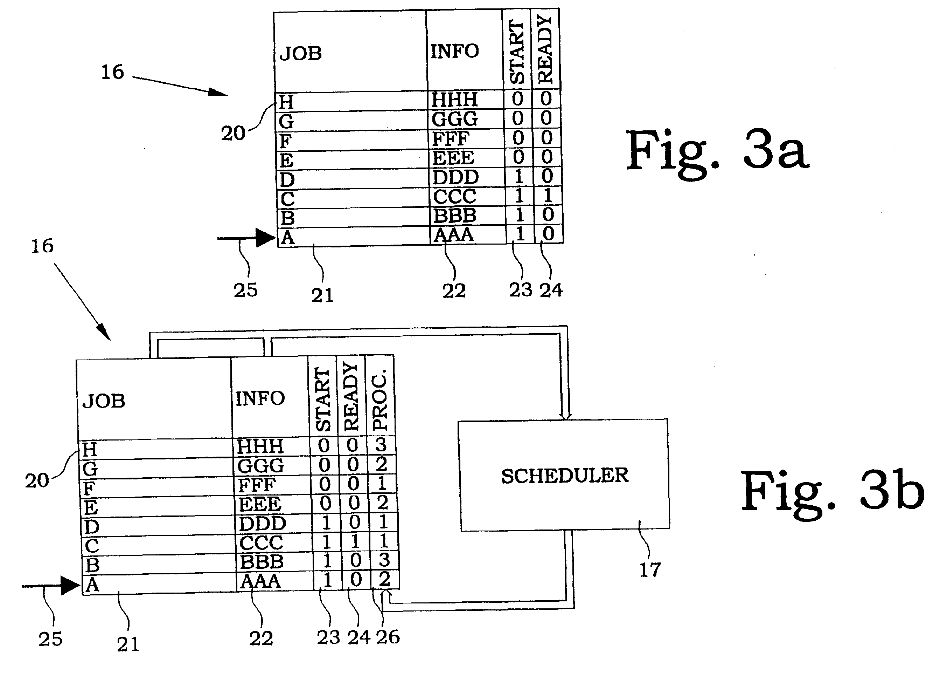

The job queue 16 is a key component for the parallel processing, since it contains all necessary information for execution of jobs. Fig. 3a is a schematic illustration of an embodiment of a job queue 16 according to the present invention. In the following examples, only three parallel processors are present in the processing system, in order to facilitate the description. The job queue 16 in fig. 3a is arranged as a FIFO buffer of jobs. Each entry 20 in the job queue 16 corresponds to one line in the figure, and comprises a number of positions 21-24 in which job related information is entered. The specification of the job 21 or any other representation is available, together with associated information 22, such as the origin of the job, a classification of the job type, the intended target of the job, data for execution, etc. The job queue 16 comprises also two flags for keeping track of the execution situation. A start flag 23 indicates if the job of that particular entry has started its execution in any of the processors 10a-e. A "1" indicates that the job is started and "0" that it still waits for execution. A ready flag 24 indicates in a similar manner if a job has finished its execution and is waiting for retirement. Here "1" indicates that the job is ready. Such an easy construction of the job queue 16 is possible to use together with the present invention.

A commit order is defined by the order of the jobs in the queue, since the job queue is a FIFO queue. A pointer 25 is associated with the commit order, and indicates the oldest job in the job queue. When the indicated job is retired, the pointer 25 is moved one step up in the job queue 16, for indicating the next job to be retired. A simple FIFO behavior for the second algorithm is created by the use of the FIFO queue and the pointer 25.

In the illustrations, the scheduler and the committer are presented as individual units. However, in reality, the natural character for such means is to implement them in a distributed manner. Parts of the scheduler or its functions may therefore be present or performed in the different processors as well as in the shared memory. In the same manner, the committer is preferably also implemented as a distributed means.

In the embodiment of fig. 3a, an execution scheduling has to be performed when a processor 10a-e gets available, since no execution scheduling information is stored in the job queue itself. In such a case, the processor informs the scheduler about the free execution capacity and the scheduler searches the job queue for a suitable job for the processor. This suitable job is then selected according to the above described first algorithm. The selected job is then executed on the free processor. An advantage with a procedure, where the actual scheduling is performed when a processor gets available and not in advance, is that an uneven load distribution easily can be compensated for by letting the algorithm search for several different prioritized alternatives. A job, which according to a first priority, is intended for a certain processor may anyway be executed on another processor if there are no other jobs available, which originally are intended for that processor. A temporary uneven load may therefore be distributed.

However, since the scheduling takes place when a processor becomes available, and the scheduling itself requests too much processor capacity, this method may be slow in certain applications, since the processor has to wait for the scheduling to be performed.

Fig. 3b illustrates an alternative embodiment of a job queue 16 for the present invention. The commit scheduling takes place in the same manner as previous, but the job queue 16 comprises in this embodiment one extra field for each entry. A scheduled execution tag 26 comprises information about the preferred processor for the present job. When a new job is entered in the queue, the scheduler 17 performs an execution scheduling based on e.g. the information of the job itself 21 and associated information 22. The scheduler 17 finds a suitable processor and stores an indication in the execution tag 26. When a processor becomes available, the execution tag is searched for an indication of the available processor, and the execution is started.

The procedure of starting the execution of a new job is fast, since the scheduling is made in advance. However, in the case where there are no scheduled jobs for that particular processor, the free processor capacity can not immediately be used. One possible solution in such situations may however be to reschedule some waiting jobs, already scheduled to another processor, to the free processor.

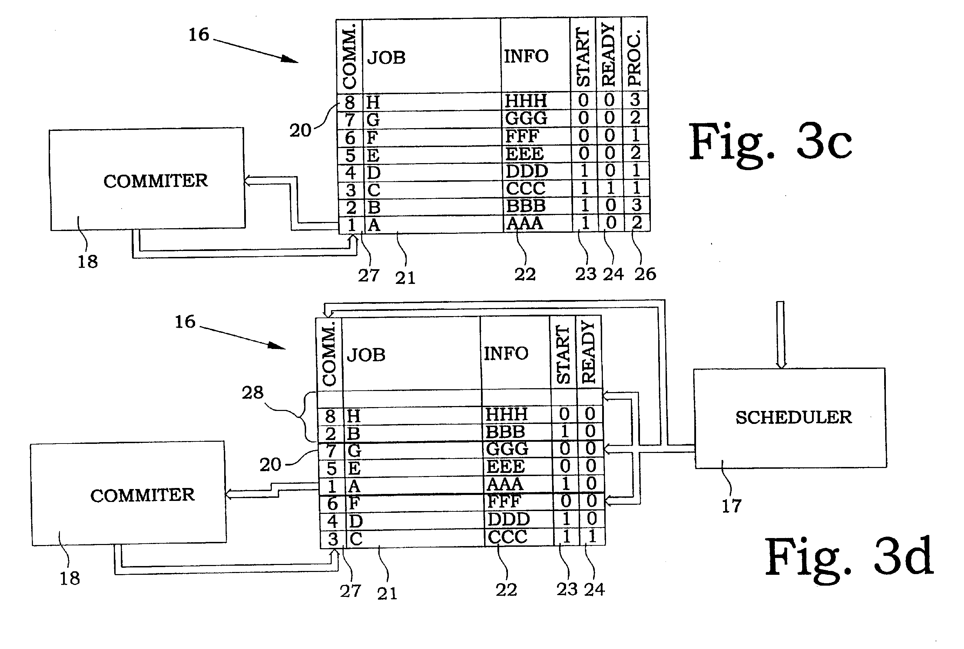

In fig. 3c, another embodiment of a job queue useful in the present invention is illustrated. Here, the commit scheduling is performed by introducing a commit tag 27 for each entry in the job queue. The commit tag 27 is set according to the second algorithm when the job is entered into the job queue 16, to indicate the global order of jobs. For such a job queue, the positions of the different jobs do not have to be in a FIFO order, since the commit tag 27 keeps track of the order. Upon retirement, the committer 18 searches for the job with the lowest commit tag, which corresponds to the job ready for retirement.

Fig. 3d illustrates another solution of a job queue useful in the present invention. The job queue 16 is here divided into three sections 28, each one corresponding to one particular processor. When a new job is entered into the job queue, the scheduler 17 sets the commit tag 27 according to the global order of the job. However, the scheduler 17 determines the position in the job queue according to the first algorithm. If a job is scheduled to the first processor, the job is entered into the first section of the job queue, if a job is scheduled to the second processor, the job is entered into the second section of the job queue and if a job is scheduled to the third processor, the job is entered into the third section of the job queue. When a processor becomes available, the first job in the section 28 that corresponds to that particular processor is selected for execution. Upon retirement, the commit tag 27 is used for ensuring that the retirement is performed in the right global order. This allows parallel dependent/coupled queues towards the processors.

The common job queue is above described as being implemented in one unit. However, the common job queue may also be constituted by memory parts of different memory units, being dependent on each other. Such coupled queues may comprise any of the above described queue designs. It is also possible to use dependent memory areas, which present different access times towards different processors.

As anyone skilled in the art, the above described four job queue embodiments are only examples of how the job queue can be implemented. Many variations and modifications may be performed, maintaining the basic idea about separate scheduling of the execution and commit orders.

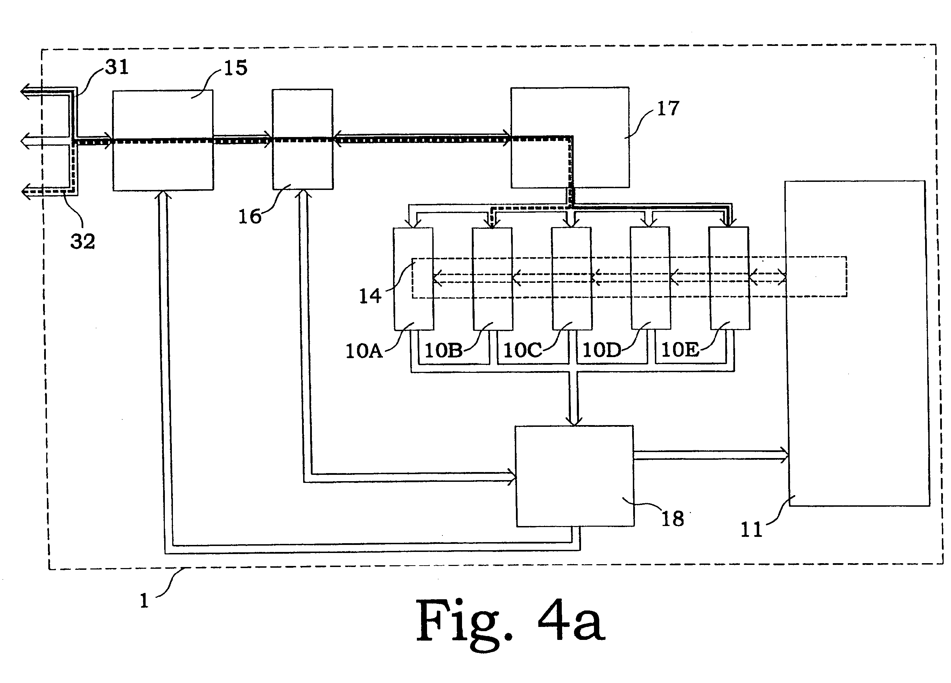

The execution scheduling is very important when optimizing the system behavior. As described above, the scheduling has to be adjusted to the particular system in which it is going to be used. Fig. 4a is a schematic diagram of a processing system according to a first embodiment of the invention. The processing system comprises a number of shared-memory processors 10a to 10e, a shared memory 11, an I/O-unit 15, a scheduler 17, data consistency means 14 and a common job queue 16.

The I/O-unit 15 receives incoming external jobs and outputs outgoing jobs. The scheduler 17 schedules the incoming jobs for execution and committing and arranges the jobs in the job queue 16. Each processor fetches or receives jobs, from the common job queue 16 for processing. This fetching is performed according to the scheduling of the first algorithm and according to an appropriate priority.

Normally, jobs are in the form of signal messages, where each message has a header and a signal body. The signal body includes parameters necessary for execution of a software task. Throughout the present disclosure, the terms "task" and "job" are used interchangeably. Typically, the signal body includes an implicit or explicit pointer to software code/data in the shared memory as well as required input operands. Consequently, the processors independently fetch and process jobs to execute corresponding software tasks or jobs in parallel.

During parallel task execution, the processors need to manipulate global data in the shared memory. In order to avoid data inconsistencies, where several processors access and manipulate the same global data or operates in incorrect order on data (during the lifetime of a job or a task, i.e. till the job retires), the data consistency means 14 must make sure that data consistency is assured at all times. The invention makes use of a collision detection and rollback procedure for assuring data consistency.

Software tasks are executed speculatively in parallel, and dependency collisions are detected so that speculatively executed tasks for which dependency collisions are detected can be rolled back and restarted. A marker method or an address comparison method generally accomplishes collision detection. In the marker method, each processor comprises means for marking the use of variables in the shared memory, and variable access collisions are then detected based on the markings. Collision detection generally has a penalty due to rollbacks (resulting in wasted processing). Note that locking a resource before use may be used in combination with collision detection to reduce penalty due to rollbacks.

A job signal normally includes a pointer, implicitly or explicitly, to instructions in the application software stored in the memory, as well as operands required in the execution of these instructions. In this sense the job signal is self-contained completely defining the corresponding job.

A general requirement for systems where the information flow is governed by protocols is that certain related events must be processed in the received order (the ordering requirements imposed by the given system protocols must be met). This is the invariant of the system, no matter how the system is implemented. The retirement order between jobs is normally defined by the arrival/creation to the processing core and will generally not be changed. However, in a processing system handling job signals of different priority levels, it may be useful to retire a job signal of higher priority level before job signals of lower priority. In general, jobs within the same priority level are retired in the same order as they arrived/are created.

Collision detection as means for assuring data consistency will be described in more detail later on.

### SCHEDULING EXAMPLES

### Traffic source based mapping

By the way of example, a hierarchical processing system comprises a central high-level processor node and a number of lower-level processors, so-called regional processors, where each regional processor in turn serves a number of hardware devices. In such a system, the events originating from the hardware devices and events coming from regional processors serving a group of devices meet the conditions imposed by the ordering requirements that are defined by the given protocols (barring error conditions, which are protected by processing at a higher level). Thus, jobs from a particular device/regional processor form a group of jobs, which typically are independent (as far as sequence dependence goes) to other such groups. Within each such group, the jobs are more likely to access the same data (over the relevant time scale), hence the cache hit ratio is likely to be improved. Furthermore, the sequence dependencies between jobs from different regional processors are almost non-existing. In order to preserve these features, each device/regional processor must always feed its jobs to the same processor 10a-e. In telecommunication applications for example, a sequence of digits received from a user, or a sequence of ISDN user part messages received for a trunk device must be processed in the received order. However, sequences of messages received for two independent trunk devices can be processed in any order as long as the sequencing for individual trunk devices is preserved.

In Fig. 4a it can be seen that jobs 31 from a predetermined source, for example a particular hardware device or communication channel, are scheduled to a predetermined processor 10e, and jobs 32 from another predetermined source, for example a particular regional processor, are scheduled to another predetermined processor 10b. Since, the number of sources normally exceeds the number of shared-memory processors by far, each processor is usually assigned a number of sources. In a typical telecom/datacom application, there could be 1024 regional processors communicating with a single central processor node. Mapping regional processors onto the multiple shared-memory processors in the central node in a load balanced way means that each shared-memory processor roughly gets 205 regional processors (assuming that there are 5 processors in the central node, and all regional processors generate the same load). In practice however, it might be beneficial to have an even finer granularity, scheduling jobs from hardware devices such as signaling devices, subscriber terminations etc. to the central node processors. This generally makes it easier to obtain load balance. Each regional processor in a telecom network might control hundreds of hardware devices. So instead of handling 10,000 or more hardware devices in a single central node processor, which of course handles the load in a time-shared manner, the solution according to the invention is to schedule jobs from the hardware devices to a number of shared-memory processors in the central node.

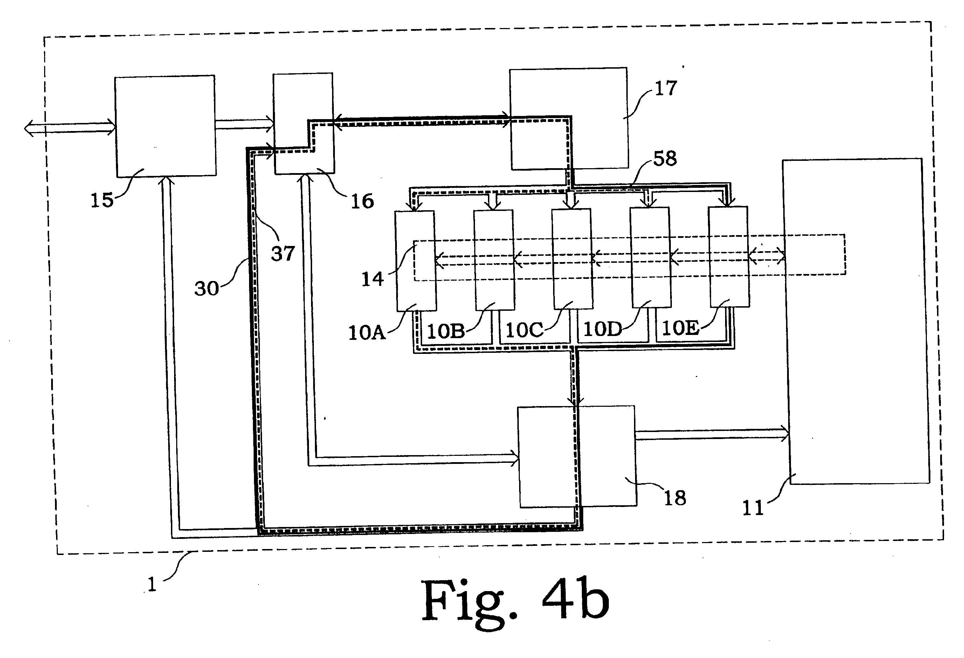

A system such as the AXE Digital Switching System of Telefonaktiebolaget LM Ericsson that processes an external job in slices connected by processor-to-processor (CP-to-CP) signals or so-called internal jobs, might impose its own scheduling requirement in addition to the one imposed by protocols. Such CP-to-CP signals typically have to be processed in the order in which they are generated (unless superseded by a higher priority signal generated by the last slice under execution). This additional scheduling requirement is met if each CP-to-CP signal (internal job) is processed in the same processor in which it was generated. This is indicated in Fig. 4b, by a dashed line 37 from the processor 10a to the job queue 16, and back to the same processor 10a. Similarly, an internal job created by processor 10e is, as indicated by the line 30, fed back to the same processor 10e. So, internal jobs are controlled by feeding them back to the same processor or processor set that generated them - hence guaranteeing that they are processed in the same order in which they were generated. This scheduling both improves the cache hit-ratio and may reduce the dependency relations.

### Software function/data target/source based mapping

As mentioned earlier, some systems process external jobs in "slices" connected by internal jobs (e.g. CP-to-CP buffered signals). The execution scheduling may be performed in such a way that a set of the multiple shared-memory processors are operated as a multiprocessor pipeline, where each external job is processed in slices as a chain of jobs which are executed in different processor stages of the pipeline. This means that the first algorithm will schedule the execution of an internal job, created by the first processor in the pipeline, to itself or another particular processor. This scheduling will thus be different from the previously described scheduling of fig. 4a. The sequencing requirement of processing signals in order of their creation will be guaranteed as long as all the signals generated by a stage are fed to the subsequent stage in the same order as they are generated. Any deviation from this rule will cause racing, which will result in dependency collision and rollback reducing the throughput. If execution of a given slice results in more than one signal, then these signals either have to be fed to the subsequent processor stage in the same order as they are generated. Alternatively, if the signals are distributed to two or more processors it is necessary to make sure that the resulting possibility of racing will be relatively rare to avoid rollbacks.

The processing system in Fig. 4b is used to illustrate also this possibility. Internal jobs generated by a processor, e.g. 10a, that is part of a multiprocessor pipeline are not fed back to the same processor according to the thick broken line 37, but are instead fed to another of the processors, 10d, according to the thin broken line 38. The logical order of the processors in the pipeline will then be serial, rather than parallel, even if the physical arrangement is in parallel.

It should be understood that when a processor stage in the multiprocessor pipeline has executed a job belonging to a first chain of jobs, and sent the resulting internal job signal to the next processor stage, it is normally free to start processing a job from the next chain of jobs, thus improving the throughput capacity.

In a general view, a "pipeline" execution decreases the number of colliding atomic accesses to global data, whereas in a job execution e.g. based on traffic source, cache hit rates are improved and sequence dependencies may be reduced. The most favorable situation would therefore be a combination of both, where flows presenting a high risk for atomic access difficulties are processed in a pipeline while flows that can be categorized in categories with little or no sequence dependency between categories are processed in parallel.

### Use of clusters

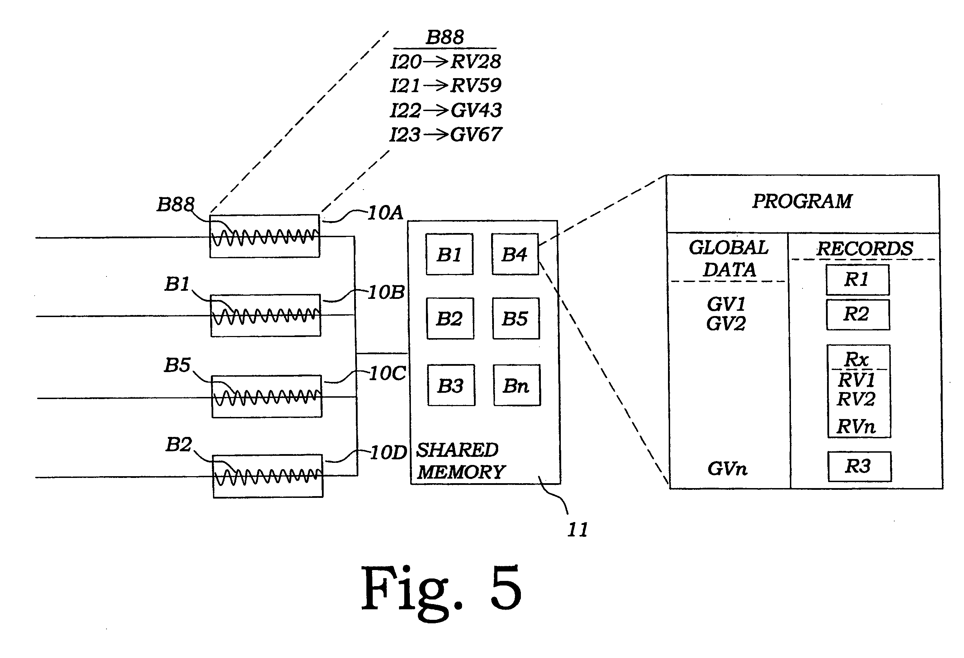

Fig. 5 is a schematic diagram of a simplified shared-memory multiprocessor system having an object-oriented design of the shared-memory software. The software in the shared memory 11 has a block/object-oriented design, and is organized as a set of blocks or classes B 1 to Bn, where each block is responsible for executing a certain function or functions. Typically, each block is split into two main sectors - a program sector where the code is stored and a data sector where the data is stored. The code in the program sector of a block can only access and operate on data belonging to the same block. The data sector in turn is preferably divided into two sectors as well. A first sector of "global" data comprises a number of global variables GV1 to GVn, and a second sector comprises e.g. "private" data such as records R1 to Rn, where each record typically comprises a number of record variables RV1 to RVn, as illustrated for record Rx.

In general, a signal entry into a block initiates processing of data within the block. On receiving a job, external or internal, each processor executes code in the block indicated by the job signal and operates on global variables and record variables that block, thus executing a software task. The execution of a software task is indicated in Fig. 5 by a wavy line in each of the processors.

In the example of Fig. 5, the first processor 10a executes code in software block B88. A number of instructions, of which only instructions 120 to 123 are illustrated, are executed, and each instruction operates on one or more variables within the block. For example, instruction 120 operates on record variable RV28 in record R1, instruction I21 operates on record variable RV59 in record R5, instruction I22 operates on the global variable GV43 and instruction I23 operates on the global variable GV67. Correspondingly, the processor 10b executes code and operates on variables in block B1, the processor 10c executes code and operates on variables in block B5 and the processor 10d executes code and operates on variables in block B2.

An example of a block-oriented software is the PLEX (Programming Language for Exchanges) software of Telefonaktiebolaget LM Ericsson, in which the entire software is organized in blocks. Java applications are examples of truly object-oriented designs.

In an object-oriented software design, the software in the shared memory is organized into blocks or classes as described above, and on receiving an external job (directed to a particular block) the corresponding processor executes code in a block/object and may generate results in the form of an internal job towards another block/object. When this internal job comes for execution it is executed in the indicated block/object and might generate another internal job towards some other block/object. The chain usually dies after a few internal jobs. In telecommunication applications, for example, each external job may typically spawn 5-10 internal jobs.

A pipelined execution scheduling customized for object-oriented software design is to allocate clusters of software blocks/classes to the processors and schedule jobs based on the target block. One of the clusters is allocated to one processor, and another cluster is allocated to another processor. In this way, each cluster of blocks/classes within the shared memory is allocated to a predetermined one of the processors, and this allocation scheme is implemented in e.g. a look-up table in the scheduler and in a look-up table in the shared memory. The look-up table links a target block to each job based on e.g. the job ID, and associates each target block to a predetermined cluster of blocks. The scheduler distributes external jobs to the processors according to the information in the look-up table. The look-up table in the shared memory is usable by all of the processors, to enable distribution of internal jobs to the processors. In other words, when a processor generates an internal job, it consults the look-up table to determine i) the corresponding target block based on the job ID, ii) the cluster to which the identified target block belongs, and iii) the processor to which the identified cluster is allocated, and then feeds the internal job signal to the appropriate processor. It is important to note that each block normally belongs to one and only one cluster, although an allocation scheme with overlapping clusters could be implemented in a slightly more elaborate way by using information such as execution state in addition to the job ID.

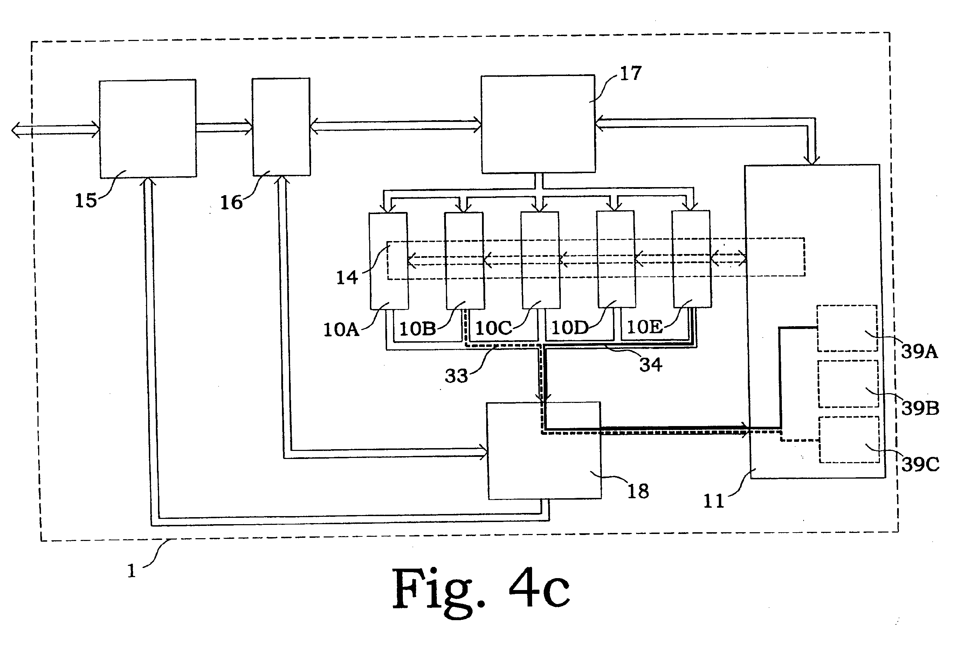

Fig. 4c illustrates an execution scheduling algorithm based on the target block 39a-c of the job. A job having a certain target block 39a in the shared memory 11 is scheduled to be executed in a certain processor 10e, as indicated by the full line path 34. Another job having another target block 39b in the shared memory 11 is scheduled to be executed in a certain processor 10b, as indicated by the broken line path 33.

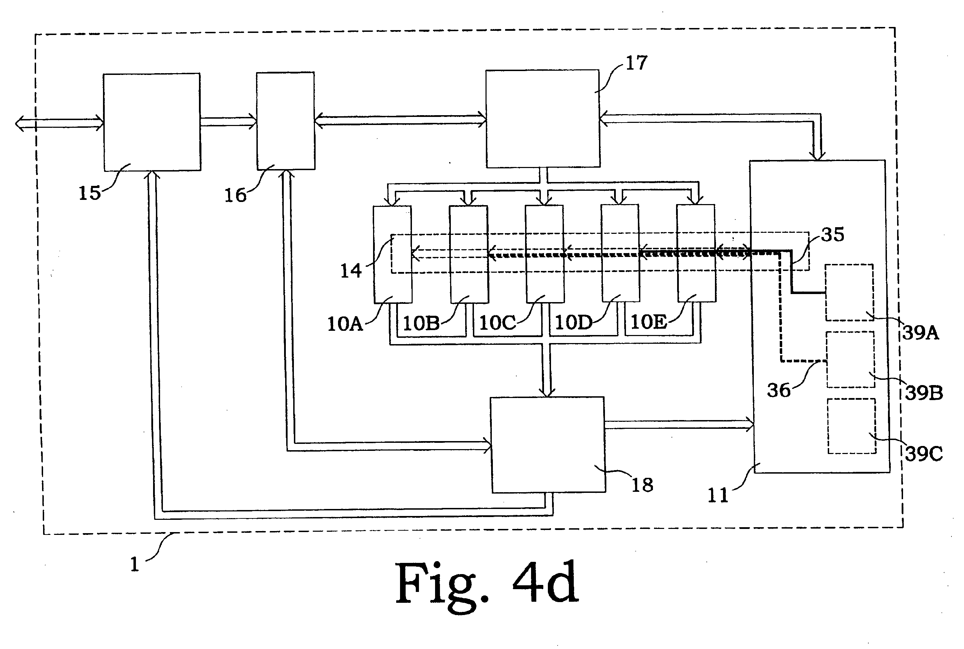

Fig. 4d instead illustrates a data source based execution scheduling of jobs. A job executes code in a block/class 39a, and the job is according to a source based scheduling algorithm scheduled to the processor 10d. The input data follows the full line 35. Another job, executing code in another block/class 39b, is scheduled to the processor 10b. The input data follows the broken line 36.

For maximum gain, the scheduling to the processors should be such that all the processors are equally loaded. Therefore, the clusters of blocks/classes are partitioned according to an "equal load" criterion (the amount of time spent in each cluster can be known for example from a similar application running on a single processor or could be gathered by monitoring system performance to readjust partitioning).

Independent on how the actual execution scheduling is performed, there might appear situations, where the load on the different processors is unequal, either temporarily or stationary. Such a situation may result in that the delay times for different jobs may differ considerably. In order to prevent such situations to occur, it is preferred to adjust the first algorithm from time to time. A simple procedure that can be used to accomplish adaptive load equalization is to reschedule some jobs originally scheduled to the processor with the highest load to another predetermined processor. Such a rescheduling may be performed periodically, or intermittently, when a strongly uneven job distribution is detected. Such procedures will handle temporary changes as well as long time changes of the load distribution.

Now, a description of collision detection will follow. In systems with collision detection as a means of assuring data consistency, the software tasks (jobs) are speculatively executed in parallel by the multiple processors, and dependency collisions are detected so that speculatively executed tasks for which dependency collisions are detected can be rolled back and restarted in proper order.

The basic principle for rollback is to go back to the beginning of one or both of the jobs involved in causing collisions. All changes made in the execution are undone up to that point and the rolled-back job is restarted later in such a way, or after such a delay, that progress can be guaranteed without compromising the efficiency. This generally means that the scheme is not allowed to cause recurring rollbacks. The actual decision to rollback will depend on the global order, e.g. of creation, of colliding jobs.

Preferably, for collision detection each processor marks the use of variables in the shared memory in executing a task, thus enabling variable access collisions to be detected. At its very basic level, the marker method consists of marking the use of individual variables in the shared memory. However, by marking larger areas instead of individual data, a more course-grained dependency collision check is realized. One way of implementing a more course-grained dependency check is to utilize standard memory management techniques including paging. Another way is to mark groupings of variables, and it has turned out be particularly efficient to mark entire records including all record variables in the records, instead of marking individual record variables. It is, however, important to choose "data areas" in such a way that if a job uses a given data area, then the probability of some other job using the same area should be very low. Otherwise, the course-grained data area marking may in fact result in a higher rollback frequency.

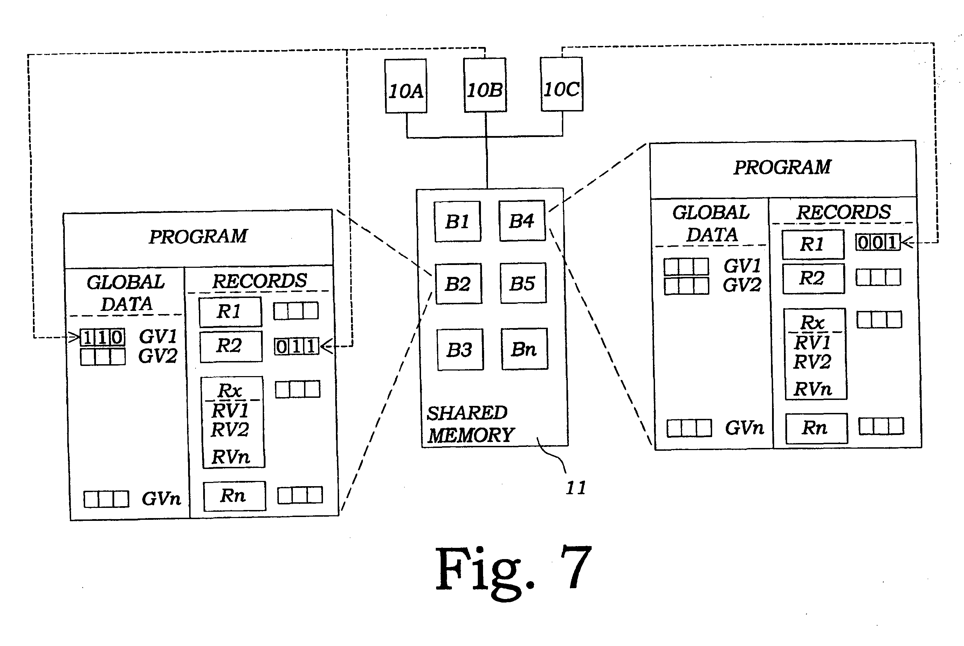

Fig. 7 illustrates the use of variable marking to detect dependency collisions in an object-oriented software design. The shared memory 11 is organized into blocks/classes B1 to Bn as described above, and a number of processors 10a to 10c are connected to the shared memory 11. Fig. 7 shows two blocks, block B2 and block B4, in more detail. In this particular realization of the marker method, each global variable GV1 to GVn and each record R1 to Rn in a block is associated with a marker field, as illustrated in Fig. 7.

The marker field has 1 bit per processor connected to the shared memory system, and hence in this exemplifying case, each marker field has 3 bits (preferably for read, write and execution state). All bits are reset at start, and each processor sets its own bit before accessing (read or write) a variable or record, and then reads the entire marker field for evaluation. If there is any other bit that is set in the marker field, then a collision is imminent, and the processor rolls back the task being executed, undoing all changes made up to that point in the execution including resetting all the corresponding marker bits. On the other hand, if no other bit is set then the processor continues execution of the task. Each processor records the address of each variable accessed during execution, and uses it to reset its own bits in each of the corresponding marker fields when it retires/is committed. In order to be able to do a rollback when a collision is detected, it is necessary to keep a copy of all modified variables (i.e. the variable states before modification) and their addresses during execution of each job.

In Fig. 7, the processor 10b needs to access the global variable GV1, and sets its own bit at the second position of the marker field associated with GV1, and then reads the entire marker field. In this case, the field (110) contains a bit set by processor 10a and a bit set by processor 10b, and consequently an imminent variable access collision is detected. The processor 10b rolls back the task being executed. Correspondingly, if processor 10b needs to access the record R2, it sets its own bit at the second position, and then reads the entire marker field. The field (011) contains a bit set by 10b and a bit set by 10c, and consequently a record access collision is detected. Also in this case the processor 10b rolls back the task being executed. When processor 10c needs to access the record R1, it first sets its own bit in the third position of the associated marker field, and then reads the entire field for evaluation. In this case, no other bits are set so the processor 10c is allowed to access the record for a read or write. Note, that when a job detecting collision rolls back it might also be necessary to roll back the job it collides with dependent on the global order e.g. of creation.

A preferred marker field approach is to provide two bits per processor, instead of the above described single bit. One bit is intended for write and one for read. This will minimize rollbacks due to data which is mostly only read. It is also possible to have marker fields per job instead of per processor.

Another approach for collision detection is referred to as the address comparison method, where read and write addresses are compared at the end of a task. The main difference compared to the marker method is that accesses by other processors are generally not checked during execution of a task starts, only at the time of retiring. An example of a specific type of dependency checking unit implementing an address comparison method is disclosed in our international patent application WO 88/02513.

Existing sequentially programmed application software normally represents large investments, and for single-processor systems thousands or millions of lines of software code already exist. In the case of implementing the multiple processors using standard off-the-shelf microprocessors, all existing software can be used by an automatic transformation of the application software and possibly modifying the virtual machine/operating system. Such an automatic transformation is preferably performed via recompilation or equivalent. The modification of the virtual machine/operating software supports data consistency means when the application software is executed on multiple processors. On the other hand, if multiple processors are implemented as specialized hardware of proprietary design, the application software can be directly migrated to the multiprocessor environment. All the software code can thus be migrated to and reused in a multiprocessor environment, thus saving time and money.

In prior art, a single-processor system may be illustrated from a stratified viewpoint. At the bottom layer, the processor such as a standard microprocessor can be found. The next level includes the operating system, and then the virtual machine comes, which interprets the application software found at the top level.

A multiprocessor system may also be illustrated from a stratified viewpoint. At the bottom level, multiple shared-memory processors are found. Then comes the operating system. The virtual machine, which by way of example may be an APZ emulator running on a SUN work station, a compiling high-performance emulator such as SIMAX or the well-known Java Virtual Machine, is modified for multiprocessor support and data-consistency related support. The sequentially programmed application software is generally transformed by simply adding code for data-consistency related support and recompiling blocks/classes if compiled, and modifying the interpreter if interpreted or postprocessing object code to insert instructions for data consistency support at appropriate places.

In the case of collision detection based on variable markings, the following steps may be taken to enable migration of application software written for a single-processor system to a multiprocessor environment. Before each write access to a variable, code for storing the address and original state of the variable is inserted into the application software to enable proper rollback. Before each read and write access to a variable, code for setting marker bits in the marker field, checking the marker field as well as storing the address of the variable is inserted into the software. The application software is then recompiled, reinterpreted or postprocessed. The hardware/operating system/virtual machine is also modified to give collision detection related support, implementing rollback and resetting of marker fields. Accordingly, if a collision is detected when executing code for checking the marker field, the control is normally transferred to the hardware/operating system/virtual machine, which performs rollback using the stored copy of the modified variables. In addition, when a job retires, the hardware/operating system/virtual machine normally takes over and resets the relevant bit in each of the marker fields given by the stored addresses of variables that have been accessed by the job.

The existing application software for execution on a single-processor system can be migrated as it is to run on a multiprocessing system, the software can then be successively modified, one step at a time, to gain more and more performance by making the software more "parallel" as and when possible.

Of course, the application software could be designed from scratch, for example for completely new applications, by designing a multithreaded software or by using parallel constructs in certain programming languages.

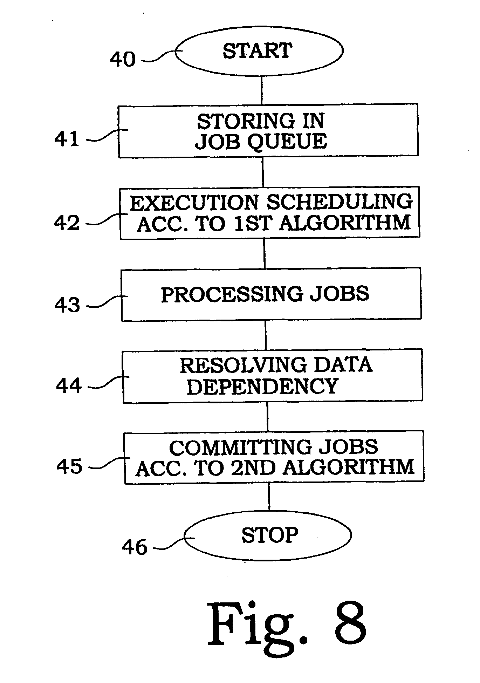

Fig. 8 illustrates a flow diagram expressing the main features of a job processing method according to the present invention. The procedure starts in step 40. In step 41, a job is stored in the common job queue. An execution scheduling is performed in step 42 according to a first algorithm. The jobs are processed in step 43 on the processors to which they were scheduled. In step 44, any data dependency is resolved, using e.g. data collision detection. In step 45, the jobs are finally retired or committed according to a second algorithm, different from the first algorithm. The procedure is ended in step 46. As described above, the different steps could be performed in different order. For example, the actual commit scheduling could be performed upon storing the jobs in the job queue. The execution scheduling could be performed in connection with the storing step, but also just before the actual execution of the job.

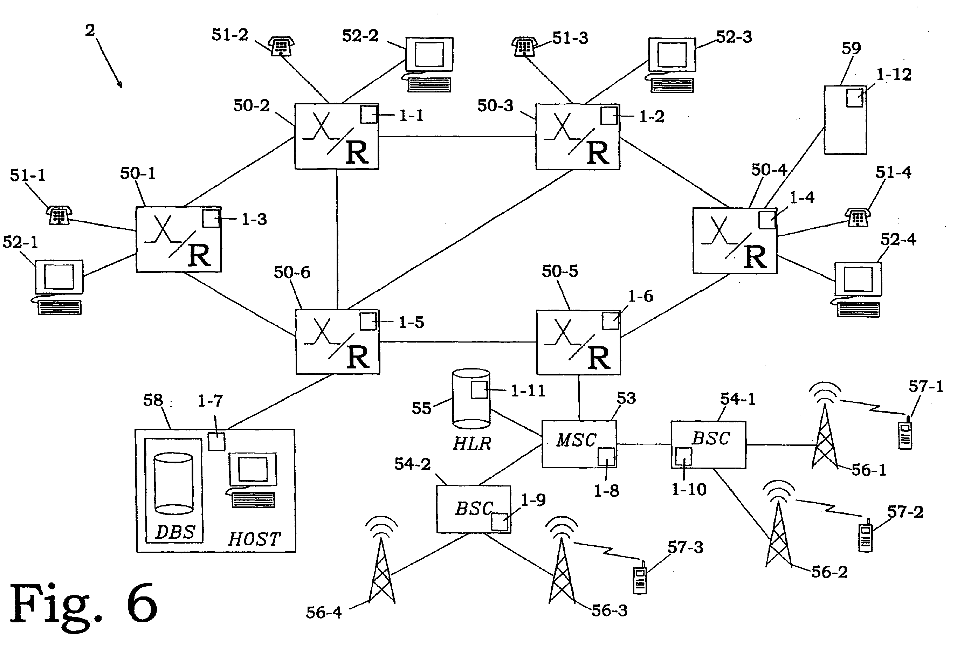

Fig. 6 is a schematic diagram of a communication system in which one or more processing systems according to the invention are implemented. The communication system 2 may support different bearer service networks such as PSTN (Public Switched Telephone Network), PLMN (Public Land Mobile Network), ISDN (Integrated Services Digital Network) and ATM (Asynchronous Transfer Mode) networks. The communication system 2 basically comprises a number of switching/routing nodes 50-1 to 50-6 interconnected by physical links that are normally grouped into trunk groups. The switching/routing nodes 50-1 to 50-4 have access points to which access terminals, such as telephones 51-1 to 51-4 and computers 52-1 to 52-4, are connected via local exchanges (not shown). The switching/routing node 50-5 is connected to a Mobile Switching Center (MSC) 53. The MSC 53 is connected to two Base Station Controllers (BSCs) 54-1 and 54-2, and a Home Location Register (HLR) node 55. The first BSC 54-1 is connected to a number of base stations 56-1 and 56-2 communicating with one or more mobile units 57-1 and 57-2. Similarly, the second BSC 54-2 is connected to a number of base stations 56-3 and 56-4 communicating with one or more mobile units 57-3. The switching/ routing node 50-6 is connected to a host computer 58 provided with a data base system (DBS). User terminals connected to the system 2, such as the computers 52-1 to 52-4, can request data base services from the data base system in the host computer 58. A server 59, e.g. a Java server, is connected to the switching/routing node 50-4. Private networks such as business networks (not shown) may also be connected to the communication system of Fig. 6.

The communication system 2 provides various services to the users connected to the network. Examples of such services are ordinary telephone calls in PSTN and PLMN, message services, LAN interconnects, Intelligent Network (IN) services, ISDN services, CTI (Computer Telephony Integration) services, video conferences, file transfers, access to the so-called Internet, paging services, video-on-demand and so on.

According to the invention, each switching node 50 in the system 2 is preferably provided with a processing system 1-1 to 1-6 according to the present invention. A call set-up requires for example the processing system to execute a sequence of jobs. This sequence of jobs defines the call set-up service on the processor level. A processing system according to the present invention is preferably also arranged in each one of the MSC 53, the BSCs 54-1 and 54-2, the HLR node 55, the host computer 58 and the server 59 of the communication system 2.

For example, a server operating on Internet Protocol (IP) packets comprises a processing system according to the present invention. The scheduler of that processing system may be arranged for scheduling IP-packets belonging to one and the same Transmission Control Protocol (TCP) session to one and the same processor.

The term event-based system includes but is not limited to telecommunication, data communication and transaction-oriented systems.

The term "shared-memory processors" is not limited to standard off-the-shelf microprocessors, but includes any type of processing units such as symmetric multiprocessors and specialized hardware, operating towards a common memory with application software and data accessible to all processing units. This also includes systems where the shared memory is distributed over several memory units and the access is not symmetrical so that the access times to different parts of the distributed, shared memory for different processors could be different.

The embodiments described above are merely given as examples, and it should be understood that the present invention is not limited thereto. Further modifications, changes and improvements, which retain the basic underlying principles disclosed and claimed herein are within the scope of the invention.

## Claims

1. A processing system (1; 1-1 - 1-12) comprising:
a job queue (16) for incoming jobs, said jobs being allowed to have mutual dependencies;
multiple shared-memory processors (10a-10e) for parallel execution of jobs;
a scheduler (17) for scheduling said jobs for execution by said processors according to a first algorithm;
means for assuring data consistency (14) between parallel jobs when data of said shared memory (11) are manipulated by the processors (10a-10e); and
means for retiring (18) said jobs;
said means for retiring (18) is arranged for retiring said jobs according to a second algorithm;
said means for retiring (18) operates according to a first-in-first-out principle according to a global order of the jobs where the oldest job retires first,
**characterized in that**
said second algorithm being different from said first algorithm;
said first algorithm is adapted, permanently or intermittently, to the particular application characteristics, phase of operation and/or hardware architecture of the processing system (1; 1-1 - 1-12);
by which adaptation said scheduler (17) being arranged for one of:
scheduling jobs generated by a predetermined source to one and the same processor;
scheduling jobs generated by a first of said processors to said first processor;
scheduling jobs destined to a predetermined target block (39A-C) in shared memory (II) to one and the same processor;
scheduling, when the jobs require input data from different data areas (39A-C) in the shared memory (11), jobs requiring data from a data area to one and the same processor;
allocating, when software in the shared memory includes a number of software blocks, and each job is targeted for at least one software block, a cluster of blocks to each processor so as to perform target-based scheduling;
scheduling jobs arriving on the same communication channel to one and the same processor;
periodically rescheduling jobs scheduled to the processor with the highest load to another predetermined processor;
scheduling of jobs based on static job classification and dependency analyses; and
scheduling jobs, when each job in said job queue (16) includes information (26, 28) indicating the processor by which the job is to be executed according to said first algorithm, according to said information (26, 28).

2. The processing system according to claim 1, **characterized in that** said retiring means (18) and said scheduler (17) are distributed means.

3. The processing system according to claim 1 or 2, **characterized in that** said scheduler (17) is arranged for scheduling jobs generated by a predetermined source to one and the same processor.

4. The processing system according to claim 3, **characterized in that** the source is selected among input ports, external processors and/or hardware devices.

5. The processing system according to any of the claims 1 to 4, **characterized in that** said scheduler (17) is arranged for scheduling jobs generated by a first of said processors to said first processor.

6. The processing system according to claim 1 or 2, **characterized in that** said scheduler (17) is arranged for scheduling jobs destined to a predetermined target to one and the same processor.

7. The processing system according to claim 1 or 2, **characterized in that** the jobs require input data from different data areas (39a-c) in the shared memory (11), and said scheduler is arranged for scheduling jobs requiring data from the data area to one and the same processor.

8. The processing system according to claim 1 or 2, **characterized in that** software in the shared memory includes a number of software blocks, and each job is targeted for at least one software block, and said scheduler is arranged for allocating a cluster of blocks to each processor so as to perform target-based scheduling.

9. The processing system according to claim 1 or 2, **characterized in that** said scheduler (17) is arranged for scheduling jobs arriving on the same communication channel to one and the same processor.

10. The processing system according to any of the claims 1 to 9, **characterized in that** said scheduler (17) is arranged for periodically rescheduling jobs scheduled to the processor with the highest load to another predetermined processor.

11. The processing system according to any of the claims 1 to 10, **characterized in that** said first algorithm is based on static job classification and dependency analyses.

12. The processing system according to any of the claims 1 to 11, **characterized in that** the processors (10a-e) are arranged for speculatively executing a number of jobs in parallel, and the means for assuring data consistency (14) comprises:
means for detecting dependencies; and
means for undoing and restarting a speculatively executed job for which a dependency collision is detected.

13. The processing system according to claim 12, **characterized in that** each processor (10a-e) comprises means for marking the use of variables in the shared memory (11) and the means for detecting dependencies includes means for detecting variable access collisions based on the markings.

14. The processing system according to claim 13, **characterized in that** the marking means marks groups of variables.

15. The processing system according to claim 12, **characterized in that** software in the shared memory (11) includes a number of software blocks, and each job is associated with a software block, and each processor (10a-e) comprises means for marking the use of variables within the block and the dependency detecting means includes means for detecting variable access collisions based on the markings.

16. The processing system according to any of the claims 1 to 15, **characterized in that** each job in said job queue (16) includes information (26, 28) indicating the processor by which the job is to be executed according to said first algorithm.

17. The processing system according to any of the claims 1 to 16, **characterized in that** said job queue (16) is sectioned, and each job is stored in a particular section (28) depending on the processor by which the job is to be executed, according to said first algorithm.

18. The processing system according to any of the claims 1 to 17, **characterized in that** said job queue (16) comprises physically separated parts, being dependent on each other.

19. The processing system according to claim 18, **characterized in that** the access times of said separated parts for a first one of said processors (10a-e) are different from the access times of said separated parts for a second one of said processors (10a-e).

20. A communication system (2) having a processing system (1; 1-1 - 1-12) according to any of the claims 1 to 19.

21. The communication system according to claim 20, **characterized in that** said scheduler (17) is arranged for scheduling jobs generated by a predetermined source to one and the same processor and said processing system (1-12) is comprised in a server (59) operating on Internet Protocol (IP) packets, said scheduler (17) is arranged for scheduling IP-packets belonging to one and the same Transmission Control Protocol (TCP) session to one and the same processor.

22. A method for job processing in a processor system (1; 1-1 - 1-12) having multiple shared-memory processors (10a-e) for parallel execution of jobs, comprising the steps of:
storing incoming jobs in a job queue (16), said jobs being allowed to have mutual dependencies;
scheduling the jobs in said job queue (16) to said processors (10a-e) according to a first algorithm;
executing said jobs on said processors (10a-e);
assuring data consistency between parallel jobs when data of said shared memory (11) are manipulated by the processors (10a-e); and
retiring said jobs;
said step of retiring comprises retiring of said jobs according to a second algorithm;
said second algorithm operates according to a first-in-first-out principle based on a global order of the jobs, where the oldest job in the job queue (16) is retired first,
**characterized in that**
said second algorithm being different from said first algorithm; and by the further step of
adapting said first algorithm, permanently or intermittently, to the particular application characteristics, phase of operation and/or hardware architecture of the processing system (1; 1-1 - 1-12);
by which adaptation said step of scheduling comprises one of the steps of:
scheduling jobs generated by a first of said processors to said first processor;
scheduling jobs generated by a predetermined source to one and the same processor;
scheduling jobs destined to a predetermined target block (39A-C) in shared memory (II) to one and the same processor;
scheduling, when jobs require input data from different data areas (39A-C) in the shared memory (11), jobs requiring data from the data area to one and the same processor;
allocating, when software in the shared memory (11) includes a number of software blocks, and each job is targeted for at least one software block, a cluster of blocks to each processor so as to perform target-based scheduling;
scheduling jobs arriving on the same communication channel to one and the same processor;
intermittently rescheduling of jobs scheduled to the processor with the highest load to another predetermined processor;
scheduling of jobs based on static job classification and dependency analyses; and
setting an execution tag (26) in said job queue (16), said execution tag (26) indicating the processor by which a job is to be executed, and scheduling jobs according to said execution tag (26).

23. The method for job processing according to claim 22, **characterized in that** said step of scheduling comprises the step of scheduling jobs generated by a first of said processors to said first processor.

24. The method for job processing according to claim 22, **characterized in that** said step of scheduling comprises the step of scheduling jobs generated by a predetermined source to one and the same processor.

25. The method for job processing according to claim 22, **characterized in that** said step of scheduling comprises the step of scheduling jobs destined to a predetermined target to one and the same processor.

26. The method for job processing according to claim 22, **characterized in that** jobs require input data from different data areas (39a-c) in the shared memory (11), and said step of scheduling comprises the step of scheduling jobs requiring data from the data area to one and the same processor.

27. The method for job processing according to claim 22, **characterized in that** software in the shared memory (11) includes a number of software blocks, and each job is targeted for at least one software block, and said step of scheduling comprises the step of allocating a cluster of blocks to each processor so as to perform target-based scheduling.

28. The method for job processing according to claim 22, **characterized in that** said step of scheduling comprises the step of scheduling jobs arriving on the same communication channel to one and the same processor.

29. The method for job processing according to any of the claims 22 to 28, **characterized in that** said step of adapting said first algorithm comprises the step of intermittently rescheduling of jobs scheduled to the processor with the highest load to another predetermined processor.

30. The method for job processing according to any of the claims 22 to 29, **characterized in that** said step of scheduling comprises the step of scheduling of jobs based on static job classification and dependency analyses.

31. The method for job processing according to any of the claims 22 to 30, **characterized in that** said execution jobs comprises the step of speculatively executing jobs in parallel, and said step of assuring data consistency comprises the steps of:
detecting dependency collisions; and
undoing and restarting a speculatively executed job having a detected dependency collision.

32. The method for job processing according to claim 31, **characterized by** the further step of each processor (10a-e) marking the use of variables in the shared memory (11), and said step of detecting dependency collisions comprises the step of detecting variable access collisions based on the markings.

33. The method for job processing according to claim 32, **characterized in that** said step of marking comprises marking groupings of variables.

34. The method for job processing according to any of the claims 22 to 33, **characterized in that** said step of scheduling is performed in connection with the entrance of a new job into said job queue (16).

35. The method for job processing according to claim 34, **characterized in that** said step of scheduling further comprises the step of setting an execution tag (26) in said job queue (16), said execution tag (26) indicating the processor by which a job is to be executed.

36. The method for job processing according to claim 34, **characterized in that** said step of scheduling further comprises the step of storing a job in a section (28) of said job queue (16), said section (28) being dependent on the processor by which the job is to be executed.

37. The method for job processing according to any of the claims 22 to 33, **characterized in that** said step of scheduling is performed in connection with that one of said processors becomes free to start the execution of a new job.

38. The method for job processing according to any of the claims 22 to 37, **characterized by** the further step of migrating application software for a single-processor system to the multiple shared-memory processors (10a-e) for execution thereby.

## Patentansprüche

1. Verarbeitungssystem (1; 1-1 bis 1-12), umfassend:
eine Jobwarteschlange (16) für eingehende Jobs, wobei die Jobs gegenseitige Abhängigkeiten haben dürfen;
mehrere Prozessoren (10a bis 10e) mit gemeinsam genutztem Speicher für die parallele Ausführung von Jobs;
einen Scheduler (17) für die Zeitablaufsteuerung der Jobs zur Ausführung durch die Prozessoren nach einem ersten Algorithmus;
ein Mittel zum Sicherstellen von Datenkonsistenz (14) zwischen parallelen Jobs, wenn Daten des gemeinsam genutzten Speichers (11) von den Prozessoren (10a bis 10e) bearbeitet werden; und
ein Mittel zum Rückordnen (18) der Jobs;
wobei das Mittel zum Rückordnen (18) so eingerichtet ist, dass es die Jobs nach einem zweiten Algorithmus rückordnet;
wobei das Mittel zum Rückordnen (18) nach einem Prinzip "first in first out" gemäß einer allgemeinen Reihenfolge der Jobs arbeitet, wo der älteste Job als erstes rückgeordnet wird,
**dadurch gekennzeichnet, dass**
sich der zweite Algorithmus von dem ersten Algorithmus unterscheidet;
der erste Algorithmus, dauerhaft oder mit Unterbrechungen, an die besonderen Anwendungseigenschaften, die Betriebsphase und/oder Hardwarearchitektur des Verarbeitungssystems (1; 1-1 bis 1-12) angepasst ist;
wobei der Scheduler (17) durch diese Anpassung für eins aus Folgendem eingerichtet ist:
Zuteilen von Jobs, die von einer vorher festgelegten Quelle erzeugt werden, an ein und denselben Prozessor;
Zuteilen von Jobs, die von einem ersten der Prozessoren erzeugt werden, an den ersten Prozessor;
Zuteilen von Jobs, die für einen vorher festgelegten Zielblock (39A-C) in dem gemeinsam genutzten Speicher (11) bestimmt sind, an ein und denselben Prozessor;
wenn die Jobs Eingangsdaten aus verschiedenen Datenbereichen (39A-C) in dem gemeinsam genutzten Speicher (11) benötigen, Zuteilen von Jobs, die Daten aus einem Datenbereich benötigen, an ein und denselben Prozessor;
wenn Software in dem gemeinsam genutzten Speicher mehrere Softwarebausteine enthält und jeder Job für mindestens einen Softwarebaustein vorgesehen ist, Zuweisen eines Bündels von Bausteinen zu jedem Prozessor, um eine zielbasierte Zeitablaufsteuerung vorzunehmen;
Zuteilen von Jobs, die am selben Datenübertragungskanal ankommen, an ein und denselben Prozessor;
in regelmäßigen Abständen Umverteilen von Jobs, die dem Prozessor mit der höchsten Last zugeteilt sind, an einen anderen vorher festgelegten Prozessor;
Steuern des Zeitablaufs von Jobs auf der Grundlage von statischen Analysen zur Einordnung und Abhängigkeit von Jobs; und
wenn jeder Job in der Jobwarteschlange (16) Informationen (26, 28) enthält, die den Prozessor angeben, mit dem der Job nach dem ersten Algorithmus ausgeführt werden soll, Steuern des Zeitablaufs von Jobs entsprechend den Informationen (26, 28).

2. Verarbeitungssystem nach Anspruch 1, **dadurch gekennzeichnet, dass** das Rückordnungsmittel (18) und der Scheduler (17) verteilte Mittel sind.

3. Verarbeitungssystem nach Anspruch 1 oder 2, **dadurch gekennzeichnet, dass** der Scheduler (17) so eingerichtet ist, dass er Jobs, die von einer vorher festgelegten Quelle erzeugt werden, ein und demselben Prozessor zuteilt.

4. Verarbeitungssystem nach Anspruch 3, **dadurch gekennzeichnet, dass** die Quelle aus Eingangsports, externen Prozessoren und/oder Hardwareeinrichtungen ausgewählt ist.

5. Verarbeitungssystem nach einem der Ansprüche 1 bis 4, **dadurch gekennzeichnet, dass** der Scheduler (17) so eingerichtet ist, dass er Jobs, die von einem ersten der Prozessoren erzeugt werden, dem ersten Prozessor zuteilt.

6. Verarbeitungssystem nach Anspruch 1 oder 2, **dadurch gekennzeichnet, dass** der Scheduler (17) so eingerichtet ist, dass er Jobs, die für ein vorher festgelegtes Ziel bestimmt sind, ein und demselben Prozessor zuteilt.

7. Verarbeitungssystem nach Anspruch 1 oder 2, **dadurch gekennzeichnet, dass** die Jobs Eingangsdaten aus verschiedenen Datenbereichen (39a-c) in dem gemeinsam genutzten Speicher (11) benötigen und der Scheduler so eingerichtet ist, dass er Jobs, die Daten aus dem Datenbereich benötigen, ein und demselben Prozessor zuteilt.

8. Verarbeitungssystem nach Anspruch 1 oder 2, **dadurch gekennzeichnet, dass** Software in dem gemeinsam genutzten Speicher mehrere Softwarebausteine enthält und jeder Job für mindestens einen Softwarebaustein vorgesehen ist und der Scheduler so eingerichtet ist, dass er jedem Prozessor ein Bündel von Bausteinen zuweist, um eine zielbasierte Zeitablaufsteuerung vorzunehmen.

9. Verarbeitungssystem nach Anspruch 1 oder 2, **dadurch gekennzeichnet, dass** der Scheduler (17) so eingerichtet ist, dass er Jobs, die am selben Datenübertragungskanal ankommen, ein und demselben Prozessor zuteilt.

10. Verarbeitungssystem nach einem der Ansprüche 1 bis 9, **dadurch gekennzeichnet, dass** der Scheduler (17) so eingerichtet ist, dass er Jobs, die dem Prozessor mit der höchsten Last zugeteilt sind, in regelmäßigen Abständen an einen anderen vorher festgelegten Prozessor umverteilt.

11. Verarbeitungssystem nach einem der Ansprüche 1 bis 10, **dadurch gekennzeichnet, dass** der erste Algorithmus auf statischen Analysen zur Einordnung und Abhängigkeit von Jobs beruht.

12. Verarbeitungssystem nach einem der Ansprüche 1 bis 11, **dadurch gekennzeichnet, dass** die Prozessoren (10a-e) so eingerichtet sind, dass sie mehrere Jobs parallel spekulativ ausführen und das Mittel zum Sicherstellen von Datenkonsistenz (14) Folgendes umfasst:
ein Mittel zum Erkennen von Abhängigkeiten; und
Mittel zum Aufheben und erneuten Beginnen mit einem spekulativ ausgeführten Job, für den ein Abhängigkeitskonflikt erkannt wird.

13. Verarbeitungssystem nach Anspruch 12, **dadurch gekennzeichnet, dass** jeder Prozessor (10a-e) ein Mittel umfasst, um die Verwendung von Variablen in dem gemeinsam genutzten Speicher (11) zu markieren und das Mittel zum Erkennen von Abhängigkeiten Mittel zum Erkennen von Variablenzugriffskonflikten anhand der Markierungen aufweist.

14. Verarbeitungssystem nach Anspruch 13, **dadurch gekennzeichnet, dass** das Markierungsmittel Gruppen von Variablen markiert.

15. Verarbeitungssystem nach Anspruch 12, **dadurch gekennzeichnet, dass** Software in dem gemeinsam genutzten Speicher (11) mehrere Softwarebausteine aufweist und jedem Job ein Softwarebaustein zugehörig ist und jeder Prozessor (10a-e) ein Mittel umfasst, um die Verwendung von Variablen in dem Baustein zu markieren und das Abhängigkeitserkennungsmittel Mittel zum Erkennen von Variablenzugriffskonflikten anhand der Markierungen aufweist.

16. Verarbeitungssystem nach einem der Ansprüche 1 bis 15, **dadurch gekennzeichnet, dass** jeder Job in der Jobwarteschlange (16) Informationen (26, 28) enthält, die den Prozessor angeben, mit dem der Job nach dem ersten Algorithmus ausgeführt werden soll.

17. Verarbeitungssystem nach einem der Ansprüche 1 bis 16, **dadurch gekennzeichnet, dass** die Jobwarteschlange (16) unterteilt ist und jeder Job in einem bestimmten Abschnitt (28) in Abhängigkeit von dem Prozessor, mit dem der Job nach dem ersten Algorithmus ausgeführt werden soll, gespeichert ist.

18. Verarbeitungssystem nach einem der Ansprüche 1 bis 17, **dadurch gekennzeichnet, dass** die Jobwarteschlange (16) physisch getrennte Teile umfasst, die voneinander abhängen.

19. Verarbeitungssystem nach Anspruch 18, **dadurch gekennzeichnet, dass** sich die Zugriffszeiten der getrennten Teile für einen ersten der Prozessoren (10a-e) von den Zugriffszeiten der getrennten Teile für einen zweiten der Prozessoren (10a-e) unterscheiden.

20. Datenübertragungssystem (2) mit einem Verarbeitungssystem (1; 1-1 bis 1-12) nach einem der Ansprüche 1 bis 19.

21. Datenübertragungssystem nach Anspruch 20, **dadurch gekennzeichnet, dass** der Scheduler (17) so angeordnet ist, dass er Jobs, die von einer vorher festgelegten Quelle erzeugt werden, ein und demselben Prozessor zuteilt, und das Verarbeitungssystem (1-12) in einem Server (59) enthalten ist, der mit Internetprotokoll-(IP)-Paketen arbeitet, der Scheduler (17) so eingerichtet ist, dass er IP-Pakete, die zu ein und derselben TCP-Sitzung (Transmission Control Protocol) gehören, ein und demselben Prozessor zuteilt.

22. Verfahren zur Jobverarbeitung in einem Prozessorsystem (1; 1-1 bis 1-12) mit mehreren Prozessoren (10a-e) mit gemeinsam genutztem Speicher für die parallele Ausführung von Jobs, das folgende Schritte umfasst:
Speichern eingehender Jobs in einer Jobwarteschlange (16), wobei die Jobs gegenseitige Abhängigkeiten haben dürfen;
Zuteilen der Jobs in der Jobwarteschlange (16) an die Prozessoren (10a-e) nach einem ersten Algorithmus;
Ausführen der Jobs in den Prozessoren (10a-e);
Sicherstellen von Datenkonsistenz zwischen parallelen Jobs, wenn Daten des gemeinsam genutzten Speichers (11) von den Prozessoren (10a-e) bearbeitet werden; und
Rückordnen der Jobs;
wobei der Schritt des Rückordnens das Rückordnen der Jobs nach einem zweiten Algorithmus umfasst;
wobei der zweite Algorithmus nach einem Prinzip "first in first out" auf der Grundlage einer allgemeinen Reihenfolge der Jobs arbeitet, wo der älteste Job in der Jobwarteschlange (16) als erstes rückgeordnet wird,
**dadurch gekennzeichnet, dass**
sich der zweite Algorithmus von dem ersten Algorithmus unterscheidet; und durch folgenden weiteren Schritt:
Anpassen des ersten Algorithmus, dauerhaft oder mit Unterbrechungen, an die besonderen Anwendungseigenschaften, die Betriebsphase und/oder Hardwarearchitektur des Verarbeitungssystems (1; 1-1 bis 1-12);
wobei der Zuteilungsschritt durch diese Anpassung einen der folgenden Schritte umfasst:
Zuteilen von Jobs, die von einem ersten der Prozessoren erzeugt werden, an den ersten Prozessor;
Zuteilen von Jobs, die von einer vorher festgelegten Quelle erzeugt werden, an ein und denselben Prozessor;
Zuteilen von Jobs, die für einen vorher festgelegten Zielblock (39A-C) in dem gemeinsam genutzten Speicher (11) bestimmt sind, an ein und denselben Prozessor;
wenn Jobs Eingangsdaten aus verschiedenen Datenbereichen (39A-C) in dem gemeinsam genutzten Speicher (11) benötigen, Zuteilen von Jobs, die Daten aus dem Datenbereich benötigen, an ein und denselben Prozessor;
wenn Software in dem gemeinsam genutzten Speicher (11) mehrere Softwarebausteine enthält und jeder Job für mindestens einen Softwarebaustein vorgesehen ist, Zuweisen eines Bündels von Bausteinen zu jedem Prozessor, um eine zielbasierte Zeitablaufsteuerung vorzunehmen;
Zuteilen von Jobs, die am selben Datenübertragungskanal ankommen, an ein und denselben Prozessor;
diskontinuierliches Umverteilen von Jobs, die dem Prozessor mit der höchsten Last zugeteilt sind, an einen anderen vorher festgelegten Prozessor;
Steuern des Zeitablaufs von Jobs auf der Grundlage von statischen Analysen zur Einordnung und Abhängigkeit von Jobs; und
Setzen eines Ausführungs-Tags (26) in der Jobwarteschlange (16), wobei der Ausführungs-Tag (26) den Prozessor angibt, mit dem ein Job ausgeführt werden soll, und Steuern des Zeitablaufs von Jobs entsprechend dem Ausführungs-Tag (26).

23. Verfahren zur Jobverarbeitung nach Anspruch 22, **dadurch gekennzeichnet, dass** der Zuteilungsschritt den Schritt des Zuteilens von Jobs, die von einemerstenoer Prozessoren erzeug werden, an den ersten Prozessor umfasst.

24. Verfahren zur Jobverarbeitung nach Anspruch 22, **dadurch gekennzeichnet, dass** der Zuteilungsschritt den Schritt des Zuteilens von Jobs, die von einer vorher festgelegten Quelle erzeugt werden, an ein und denselben Prozessor umfasst.

25. Verfahren zur Jobverarbeitung nach Anspruch 22, **dadurch gekennzeichnet, dass** der Zuteilungsschritt den Schritt des Zuteilens von Jobs, die für ein vorher festgelegtes Ziel bestimmt sind, an ein und denselben Prozessor umfasst.

26. Verfahren zur Jobverarbeitung nach Anspruch 22, **dadurch gekennzeichnet, dass** Jobs Eingangsdaten aus verschiedenen Datenbereichen (39a-c) in dem gemeinsam genutzten Speicher (11) benötigen und der Zuteilungsschritt den Schritt des Zuteilens von Jobs, die Daten aus dem Datenbereich benötigen, an ein und denselben Prozessor umfasst.

27. Verfahren zur Jobverarbeitung nach Anspruch 22, **dadurch gekennzeichnet, dass** Software in dem gemeinsam genutzten Speicher (11) Softwarebausteine enthält und jeder Job für mindestens einen Softwarebaustein vorgesehen ist und der Zuteilungsschritt den Schritt des Zuweisens eines Bündels von Bausteinen zu jedem Prozessor umfasst, um eine zielbasierte Zeitablaufsteuerung vorzunehmen.

28. Verfahren zur Jobverarbeitung nach Anspruch 22, **dadurch gekennzeichnet, dass** der Zuteilungsschritt den Schritt des Zuteilens von Jobs, die am selben Datenübertragungskanal ankommen, an ein und denselben Prozessor umfasst.

29. Verfahren zur Jobverarbeitung nach einem der Ansprüche 22 bis 28, **dadurch gekennzeichnet, dass** der Schritt des Anpassens des ersten Algorithmus den Schritt des diskontinuierlichen Umverteilens von Jobs, die dem Prozessor mit der höchsten Last zugeteilt sind, an einen anderen vorher festgelegten Prozessor umfasst.

30. Verfahren zur Jobverarbeitung nach einem der Ansprüche 22 bis 29, **dadurch gekennzeichnet, dass** der Zuteilungsschritt den Schritt des Steuerns des Zeitablaufs von Jobs auf der Grundlage von statischen Analysen zur Einordnung und Abhängigkeit von Jobs umfasst.

31. Verfahren zur Jobverarbeitung nach einem der Ansprüche 22 bis 30, **dadurch gekennzeichnet, dass** das Ausführen von Jobs den Schritt des parallelen spekulativen Ausführens von Jobs umfasst, und der Schritt des Sicherstellens von Datenkonsistenz folgende Schritte umfasst:
Erkennen von Abhängigkeitskonflikten; und
Aufheben und erneutes Beginnen mit einem spekulativ ausgeführten Job, der einen erkannten Abhängigkeitskonflikt aufweist.

32. Verfahren zur Jobverarbeitung nach Anspruch 31, **gekennzeichnet durch** den weiteren Schritt, dass jeder Prozessor (10a-e) die Verwendung von Variablen in dem gemeinsam genutzten Speicher (11) markiert, und **dadurch**, dass der Schritt des Erkennens von Abhängigkeitskonflikten den Schritt des Erkennens von Variablenzugriffskonflikten anhand der Markierungen umfasst.

33. Verfahren zur Jobverarbeitung nach Anspruch 32, **dadurch gekennzeichnet, dass** der Schritt des Markierens das Markieren von Gruppierungen von Variablen umfasst.

34. Verfahren zur Jobverarbeitung nach einem der Ansprüche 22 bis 33, **dadurch gekennzeichnet, dass** der Zuteilungsschritt in Verbindung mit dem Ankommen eines neuen Jobs in der Jobwarteschlange (16) durchgeführt wird.

35. Verfahren zur Jobverarbeitung nach Anspruch 34, **dadurch gekennzeichnet, dass** der Zuteilungsschritt ferner den Schritt des Setzens eines Ausführungs-Tags (26) in der Jobwarteschlange (16) umfasst, wobei der Ausführungs-Tag (26) den Prozessor angibt, mit dem ein Job ausgeführt werden soll.

36. Verfahren zur Jobverarbeitung nach Anspruch 34, **dadurch gekennzeichnet, dass** der Zuteilungsschritt ferner den Schritt des Speicherns eines Jobs in einem Abschnitt (28) der Jobwarteschlange (16) umfasst, wobei der Abschnitt (28) von dem Prozessor abhängig ist, mit dem der Job ausgeführt werden soll.

37. Verfahren zur Jobverarbeitung nach einem der Ansprüche 22 bis 33, **dadurch gekennzeichnet, dass** der Zuteilungsschritt in Verbindung damit durchgeführt wird, dass einer der Prozessoren frei für den Beginn des Ausführens eines neuen Jobs wird.

38. Verfahren zur Jobverarbeitung nach einem der Ansprüche 22 bis 37, **gekennzeichnet durch** den weiteren Schritt des Migrierens von Anwendungssoftware für ein Einzelprozessorsystem zu den mehreren Prozessoren (10a-e) mit gemeinsam genutztem Speicher für die Ausführung damit.

## Revendications

1. Système de traitement (1 ; 1-1 à 1-12) comprenant :
une file d'attente de travaux (16) pour des travaux entrants, lesdits travaux étant autorisés à avoir des dépendances mutuelles ;
plusieurs processeurs (10a à 10e) à mémoire partagée pour l'exécution parallèle de travaux ;
un ordonnanceur (17) pour ordonnancer lesdits travaux pour l'exécution par lesdits processeurs en fonction d'un premier algorithme ;
un moyen pour assurer la cohérence des données (14) entre des travaux parallèles quand des données de ladite mémoire partagée (11) sont manipulées par les processeurs (10a à 10e) ; et
un moyen pour sortir (18) lesdits travaux ;
ledit moyen pour sortir (18) étant agencé pour sortir lesdits travaux en fonction d'un second algorithme ;
ledit moyen pour sortir (18) fonctionnant selon un principe de premier entré, premier sorti en fonction d'un ordre global des travaux où le travail le plus ancien est sorti le premier,
**caractérisé en ce que**
ledit second algorithme est différent dudit premier algorithme ;
ledit premier algorithme est adapté, en permanence ou par intermittence, aux caractéristiques d'application particulières, à la phase de fonctionnement et/ou à l'architecture matérielle du système de traitement (1 ; 1-1 à 1-12) ;
ledit ordonnanceur (17) étant agencé du fait de l'adaptation pour au choix :
ordonnancer sur un seul et même processeur des travaux générés par une source prédéterminée ;
ordonnancer des travaux générés par un premier desdits processeurs sur ledit premier processeur ;
ordonnancer sur un seul et même processeur des travaux destinés à un bloc cible prédéterminé (39A-C) dans la mémoire partagée (11) ;
quand les travaux nécessitent des données d'entrée de différentes zones de données (39A-C) dans la mémoire partagée (11), ordonnancer sur un seul et même processeur des travaux nécessitant des données d'une zone de données ;
quand un logiciel dans la mémoire partagée comporte plusieurs blocs logiciels, et que chaque travail est ciblé pour au moins un bloc logiciel, allouer un groupe de blocs à chaque processeur de manière à effectuer un ordonnancement basé sur la cible ;
ordonnancer sur un seul et même processeur des travaux arrivant sur la même voie de transmission ;
réordonnancer périodiquement sur un autre processeur prédéterminé des travaux ordonnancés sur le processeur avec la charge la plus élevée ;
ordonnancer des travaux sur la base d'analyses statiques de classification de travaux et de dépendance ; et
ordonnancer des travaux, quand chaque travail dans ladite file d'attente de travaux (16) comporte des informations (26, 28) indiquant le processeur par lequel le travail doit être exécuté en fonction dudit premier algorithme, selon lesdites informations (26, 28).

2. Système de traitement selon la revendication 1, **caractérisé en ce que** ledit moyen de sortie (18) et ledit ordonnanceur (17) sont des moyens distribués.

3. Système de traitement selon la revendication 1 ou 2, **caractérisé en ce que** ledit ordonnanceur (17) est agencé pour ordonnancer sur un seul et même processeur des travaux générés par une source prédéterminée.

4. Système de traitement selon la revendication 3, **caractérisé en ce que** la source est choisie parmi des bornes d'entrée, des processeurs externes et/ou des équipements matériels.

5. Système de traitement selon l'une quelconque des revendications 1 à 4, **caractérisé en ce que** ledit ordonnanceur (17) est agencé pour ordonnancer des travaux générés par un premier desdits processeurs sur ledit premier processeur.

6. Système de traitement selon la revendication 1 ou 2, **caractérisé en ce que** ledit ordonnanceur (17) est agencé pour ordonnancer sur un seul et même processeur des travaux destinés à une cible prédéterminée.

7. Système de traitement selon la revendication 1 ou 2, **caractérisé en ce que** les travaux nécessitent des données d'entrée de différentes zones de données (39a-c) dans la mémoire partagée (11), et ledit ordonnanceur est agencé pour ordonnancer sur un seul et même processeur des travaux nécessitant des données de la zone de données.

8. Système de traitement selon la revendication 1 ou 2, **caractérisé en ce qu'**un logiciel dans la mémoire partagée comporte plusieurs blocs logiciels, et chaque travail est ciblé pour au moins un bloc logiciel, et ledit ordonnanceur est agencé pour allouer un groupe de blocs à chaque processeur de manière à effectuer un ordonnancement basé sur la cible.

9. Système de traitement selon la revendication 1 ou 2, **caractérisé en ce que** ledit ordonnanceur (17) est agencé pour ordonnancer sur un seul et même processeur des travaux arrivant sur la même voie de transmission.

10. Système de traitement selon l'une quelconque des revendications 1 à 9, **caractérisé en ce que** ledit ordonnanceur (17) est agencé pour réordonnancer périodiquement sur un autre processeur prédéterminé des travaux ordonnancés sur le processeur avec la charge la plus élevée.

11. Système de traitement selon l'une quelconque des revendications 1 à 10, **caractérisé en ce que** ledit premier algorithme est basé sur des analyses statiques de classification de travaux et de dépendance.

12. Système de traitement selon l'une quelconque des revendications 1 à 11, **caractérisé en ce que** les processeurs (10a-e) sont agencés pour exécuter de manière spéculative plusieurs travaux en parallèle, et le moyen pour assurer la cohérence des données (14) comprend :
un moyen pour détecter des dépendances ; et
des moyens pour annuler et redémarrer un travail exécuté de manière spéculative pour lequel un conflit de dépendance est détecté.

13. Système de traitement selon la revendication 12, **caractérisé en ce que** chaque processeur (10a-e) comprend un moyen pour marquer l'utilisation de variables dans la mémoire partagée (11) et le moyen pour détecter des dépendances comporte des moyens pour détecter des conflits d'accès aux variables sur la base des marqueurs.

14. Système de traitement selon la revendication 13, **caractérisé en ce que** le moyen de marquage marque des groupes de variables.

15. Système de traitement selon la revendication 12, **caractérisé en ce qu'**un logiciel dans la mémoire partagée (11) comporte plusieurs blocs logiciels, et chaque travail est associé à un bloc logiciel, et chaque processeur (10a-e) comporte un moyen pour marquer l'utilisation de variables dans le bloc et le moyen de détection de dépendance comporte des moyens pour détecter des conflits d'accès aux variables sur la base des marqueurs.

16. Système de traitement selon l'une quelconque des revendications 1 à 15, **caractérisé en ce que** chaque travail dans ladite file d'attente de travaux (16) comporte des informations (26, 28) indiquant le processeur par lequel le travail doit être exécuté en fonction dudit premier algorithme.

17. Système de traitement selon l'une quelconque des revendications 1 à 16, **caractérisé en ce que** ladite file d'attente de travaux (16) est segmentée, et chaque travail est stocké dans un segment particulier (28) selon le processeur par lequel le travail doit être exécuté en fonction dudit premier algorithme.

18. Système de traitement selon l'une quelconque des revendications 1 à 17, **caractérisé en ce que** ladite file d'attente de travaux (16) comprend des parties séparées physiquement, qui sont dépendantes les unes des autres.

19. Système de traitement selon la revendication 18, **caractérisé en ce que** les temps d'accès desdites parties séparées pour un premier desdits processeurs (10a-e) sont différents des temps d'accès desdites parties séparées pour un second desdits processeurs (10a-e).

20. Système de transmission (2) présentant un système de traitement (1 ; 1-1 à 1-12) selon l'une quelconque des revendications 1 à 19.

21. Système de transmission selon la revendication 20, **caractérisé en ce que** ledit ordonnanceur (17) est agencé pour ordonnancer sur un seul et même processeur des travaux générés par une source prédéterminée et ledit système de traitement (1-12) est compris dans un serveur (59) opérant sur des paquets IP (Internet Protocol), ledit ordonnanceur (17) est agencé pour ordonnancer sur un seul et même processeur des paquets IP appartenant à une seule et même session TCP (Transmission Control Protocol).

22. Procédé de traitement de travaux dans un système de processeur (1 ; 1-1 à 1-12) présentant plusieurs processeurs (10a-e) à mémoire partagée pour l'exécution parallèle de travaux, comprenant les étapes consistant à :
stocker des travaux entrants dans une file d'attente de travaux (16), lesdits travaux étant autorisés à présenter des dépendances mutuelles ;
ordonnancer les travaux dans ladite file d'attente de travaux (16) sur lesdits processeurs (10a-e) en fonction d'un premier algorithme ;
exécuter lesdits travaux sur lesdits processeurs (10a-e) ;
assurer la cohérence des données entre des travaux parallèles quand des données de ladite mémoire partagée (11) sont manipulées par les processeurs (10a-e) ; et
sortir lesdits travaux ;
ladite étape de sortie comprenant la sortie desdits travaux en fonction d'un second algorithme ;
ledit second algorithme fonctionnant selon un principe de premier entré, premier sorti sur la base d'un ordre global des travaux, où le travail le plus ancien dans la file d'attente de travaux (16) est sorti en premier,
**caractérisé en ce que**
ledit second algorithme est différent dudit premier algorithme ; et par l'étape supplémentaire consistant à
adapter ledit premier algorithme, en permanence ou par intermittence, aux caractéristiques d'application particulières, à la phase de fonctionnement et/ou à l'architecture matérielle du système de traitement (1 ; 1-1 à 1-12) ;
ladite étape d'ordonnancement comprenant du fait de cette adaptation l'une des étapes consistant à :
ordonnancer des travaux générés par un premier desdits processeurs sur ledit premier processeur ;
ordonnancer sur un seul et même processeur des travaux générés par une source prédéterminée ;
ordonnancer sur un seul et même processeur des travaux destinés à un bloc cible prédéterminé (39A-C) dans la mémoire partagée (11) ;
quand des travaux nécessitent des données d'entrée de différentes zones de données (39A-C) dans la mémoire partagée (11), ordonnancer sur un seul et même processeur des travaux nécessitant des données de la zone de données ;
quand un logiciel dans la mémoire partagée (11) comporte plusieurs blocs logiciels, et que chaque travail est ciblé pour au moins un bloc logiciel, allouer un groupe de blocs à chaque processeur de manière à effectuer un ordonnancement basé sur la cible ;
ordonnancer sur un seul et même processeur des travaux arrivant sur la même voie de transmission ;
réordonnancer par intermittence sur un autre processeur prédéterminé des travaux ordonnancés sur le processeur avec la charge la plus élevée ;
ordonnancer des travaux sur la base d'analyses statiques de classification de travaux et de dépendance ; et
placer un repère d'exécution (26) dans ladite file d'attente de travaux (16), ledit repère d'exécution (26) indiquant le processeur par lequel un travail doit être exécuté, et ordonnancer des travaux selon ledit repère d'exécution (26).

23. Procédé de traitement de travaux selon la revendication 22, **caractérisé en ce que** ladite étape d'ordonnancement comprend l'étape consistant à ordonnancer des travaux générés par un premier desdits processeurs sur ledit premier processeur.

24. Procédé de traitement de travaux selon la revendication 22, **caractérisé en ce que** ladite étape d'ordonnancement comprend l'étape consistant à ordonnancer sur un seul et même processeur des travaux générés par une source prédéterminée.

25. Procédé de traitement de travaux selon la revendication 22, **caractérisé en ce que** ladite étape d'ordonnancement comprend l'étape consistant à ordonnancer sur un seul et même processeur des travaux destinés à une cible prédéterminée.

26. Procédé de traitement de travaux selon la revendication 22, **caractérisé en ce que** des travaux nécessitent des données d'entrée de différentes zones de données (39a-c) dans la mémoire partagée (11), et ladite étape d'ordonnancement comprend l'étape consistant à ordonnancer sur un seul et même processeur des travaux nécessitant des données de la zone de données.

27. Procédé de traitement de travaux selon la revendication 22, **caractérisé en ce qu'**un logiciel dans la mémoire partagée (11) comporte plusieurs blocs logiciels, et chaque travail est ciblé pour au moins un bloc logiciel, et ladite étape d'ordonnancement comprend l'étape consistant à allouer un groupe de blocs à chaque processeur de manière à effectuer un ordonnancement basé sur la cible.

28. Procédé de traitement de travaux selon la revendication 22, **caractérisé en ce que** ladite étape d'ordonnancement comprend l'étape consistant à ordonnancer sur un seul et même processeur des travaux arrivant sur la même voie de transmission.

29. Procédé de traitement de travaux selon l'une quelconque des revendications 22 à 28, **caractérisé en ce que** ladite étape d'adaptation dudit premier algorithme comprend l'étape consistant à réordonnancer par intermittence sur un autre processeur prédéterminé des travaux ordonnancés sur le processeur avec la charge la plus élevée.

30. Procédé de traitement de travaux selon l'une quelconque des revendications 22 à 29, **caractérisé en ce que** ladite étape d'ordonnancement comprend l'étape consistant à ordonnancer des travaux sur la base d'analyses statiques de classification de travaux et de dépendances.

31. Procédé de traitement de travaux selon l'une quelconque des revendications 22 à 30, **caractérisé en ce que** ladite exécution de travaux comprend l'étape consistant à exécuter de manière spéculative des travaux en parallèle, et ladite étape consistant à assurer la cohérence des données comprend les étapes consistant à :
détecter des conflits de dépendance ; et
annuler et redémarrer un travail exécuté de manière spéculative présentant un conflit de dépendance détecté.

32. Procédé de traitement de travaux selon la revendication 31, **caractérisé par** l'étape supplémentaire selon laquelle chaque processeur (10a-e) marque l'utilisation de variables dans la mémoire partagée (11), et en ce que ladite étape de détection de conflits de dépendance comprend l'étape consistant à détecter des conflits d'accès aux variables sur la base des marqueurs.

33. Procédé de traitement de travaux selon la revendication 32, **caractérisé en ce que** ladite étape de marquage comprend le marquage de groupements de variables.

34. Procédé de traitement de travaux selon l'une quelconque des revendications 22 à 33, **caractérisé en ce que** ladite étape d'ordonnancement est effectuée en liaison avec l'entrée d'un nouveau travail dans ladite file d'attente de travaux (16).

35. Procédé de traitement de travaux selon la revendication 34, **caractérisé en ce que** ladite étape d'ordonnancement comprend en outre l'étape consistant à placer un repère d'exécution (26) dans ladite file d'attente de travaux (16), ledit repère d'exécution (26) indiquant le processeur par lequel un travail doit être exécuté.

36. Procédé de traitement de travaux selon la revendication 34, **caractérisé en ce que** ladite étape d'ordonnancement comprend en outre l'étape consistant à stocker un travail dans un segment (28) de ladite file d'attente de travaux (16), ledit segment (28) étant dépendant du processeur par lequel le travail doit être exécuté.

37. Procédé de traitement de travaux selon l'une quelconque des revendications 22 à 33, **caractérisé en ce que** ladite étape d'ordonnancement est effectuée en liaison avec le fait que l'un desdits processeurs devient libre pour commencer l'exécution d'un nouveau travail.

38. Procédé de traitement de travaux selon l'une quelconque des revendications 22 à 37, **caractérisé par** l'étape supplémentaire consistant à migrer un logiciel d'application pour un système à processeur unique sur les plusieurs processeurs (10a-e) à mémoire partagée pour l'exécution par ceux-ci.
